(19) Europäisches Patentamt
European Patent Office
Office européen des brevets

(11) EP 1 619 739 B1

(12) **EUROPEAN PATENT SPECIFICATION**

(45) Date of publication and mention of the grant of the patent:
**22.09.2010 Bulletin 2010/38**

(51) Int Cl.:
***H01M 8/10*** *(2006.01)* ***C08J 5/22*** *(2006.01)*
***C25B 9/10*** *(2006.01)*

(21) Application number: **05015000.2**

(22) Date of filing: **11.07.2005**

(54) **Membrane-electrode structure for solid polymer fuel cell and solid polymer fuel cell**

Membran-Elektroden-Einheit für Polymerelektrolytbrennstoffzelle und Polymerelektrolytbrennstoffzelle

Assemblage membrane-électrode pour une pile à combustible à électrolyte polymère et pile à combustible à électrolyte polymère

(84) Designated Contracting States:
**DE GB**

(30) Priority: **20.07.2004 JP 2004210954**

(43) Date of publication of application:
**25.01.2006 Bulletin 2006/04**

(73) Proprietor: **Honda Motor Co., Ltd.**
**Tokyo (JP)**

(72) Inventors:
- **Kanaoka, Nagayuki**
**Wako-shi**
**Saitama 351-0193 (JP)**
- **Iguchi, Masaru**
**Wako-shi**
**Saitama 351-0193 (JP)**
- **Sohma, Hiroshi**
**Wako-shi**
**Saitama 351-0193 (JP)**

(74) Representative: **Böhm, Brigitte et al**
**Weickmann & Weickmann**
**Patentanwälte**
**Postfach 86 08 20**
**81635 München (DE)**

(56) References cited:
**EP-A- 1 517 390** **EP-A- 1 603 182**
**WO-A-2004/040681** **DE-A1- 10 201 691**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 619 739 B1

## Description

### BACKGROUND OF THE INVENTION

#### Field of the Invention

The present invention relates to a membrane-electrode structure for a solid polymer fuel cell and a solid polymer fuel cell having the membrane-electrode structure.

#### Description of the Related Art

While petroleum resources are depleted, environmental problems such as global warming caused by consumption of fossil fuels are being aggravated, and a fuel cell draws attention as a clean source of electric power for electric motors which does not generate carbon dioxide and has been developed extensively, and partly, has begun to be put in practical use. When a motorcar and the like are to be equipped with a fuel cell as mentioned above, a solid polymer fuel cell using a polymer electrolyte membrane, from which high voltage and large current can be easily obtained, is suitably used.

As an electrode structure for use in the above-mentioned solid polymer fuel cell, there is known a structure having a pair of electrode catalyst layers formed with a catalyst such as platinum supported on catalyst carriers such as carbon black and bound together with an ion-conductive polymer binder, and in this structure, an ion-conductive polymer electrolyte membrane is sandwiched between the electrode catalyst layers and a diffusion layer is laminated on each of the electrode catalyst layers. This electrode structure further contains a separator which is laminated on each of the electrode catalyst layers and serves as a gas passage and thus a solid polymer fuel cell is constructed.

In the above-mentioned solid polymer fuel cell, one of the electrode catalyst layers functions as a fuel electrode to which reducing gas such as hydrogen and methanol is introduced through the diffusion layer while the other electrode catalyst layer functions as an oxygen electrode to which oxidizing gas such as air and oxygen is introduced through the diffusion layer. In this construction, the catalyst contained in the above-mentioned electrode catalyst layer of the fuel electrode side acts on the reducing gas to generate protons and electrons therefrom and the protons migrate through the polymer electrolyte membrane to the electrode catalyst layer on the oxygen electrode. The protons thus moved into the electrode catalyst layer on the oxygen electrode side react with the above-mentioned oxidizing gas introduced into the oxygen electrode and electrons and generate water by the action of the catalyst contained in the electrode catalyst layer. Accordingly, by connecting the fuel electrode with the oxygen electrode through a conductive wire, a circuit which passes the electrons generated in the fuel electrode to the oxygen electrode is formed, and current can be taken out.

In the above-mentioned electrode structure, polymers belonging to so-called positive ion exchange resins, for example, sulfonated vinyl polymers such as polystyrene sulfonic acid, perfluoroalkylsulfonic acid polymers typicallyrepresentedbyNafion (trade name, productof DuPont) , organic polymers obtained by introducing a sulfonic acid group or a phosphoric acid group to a heat-resistant polymer such perfluoroalkylcarboxylic acid polymer, polybenzimidazole and polyetheretherketone can be preferably used as a polymer electrolyte membrane mentioned above.

A solid polymer electrolyte which consists of sulfonated rigid polyphenylene is also known (see, for example, United States Patent No. 5,403,675). The rigid polyphenylene contains as a main component a polymer obtained by polymerizing an aromatic compound consisting of a phenylene chain and is reacted with a sulfonating agent to introduce sulfonic acid groups, and as the amount of the introduced sulfonic acid group increases, the degree of proton conductivity is improved.

Such a rigid polyphenylene, however, significantly deteriorates in toughness, resistance to hot water, etc. when it is sulfonated, and therefore, the membrane-electrode structure for a solid polymer fuel cell having a polymer electrolyte membrane consisting of the rigid polymer has a problem that the durability is inferior.

### SUMMARY OF THE INVENTION

An object of the present invention is to eliminate these disadvantages and provide a membrane-electrode structure for a solid polymer fuel cell having excellent power generation performance along with excellent durability.

Another object of the present invention is to provide a solid polymer fuel cell havingamembrane-electrode structure mentioned above and excellent in power generation performance and durability.

In order to achieve these objects, the membrane-electrode structure for a solid polymer fuel cell of the present invention is a membrane-electrode structure for a solid polymer fuel cell having a polymer electrolyte membrane sandwiched between a pair of catalyst-containing electrodes, wherein the polymer electrolyte membrane comprises a constituent unit (A) which has an ion conductive moiety consisting of a sulfonic acid group and is represented by the following general formula (I) and a constituent unit (B) consisting only of non-ion conductive moiety which has a number average

molecular weight in the range of 3000 to 8000 measured by gel permeation chromatography and is represented by the following general formula (II):

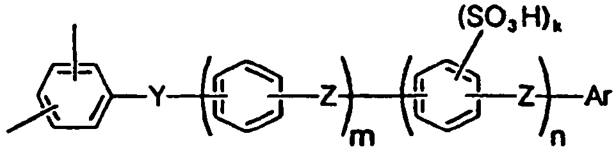 ----------- ( I )

(wherein Y represents a divalent electron withdrawing group; Z represents a divalent electron donating group or a direct bond; Ar represents an aromatic group having a substitutent represented by $-SO_3H$; m represents an integer of 0 to 10; n represents an integer of 0 to 10; and k represents an integer of 1 to 4.)

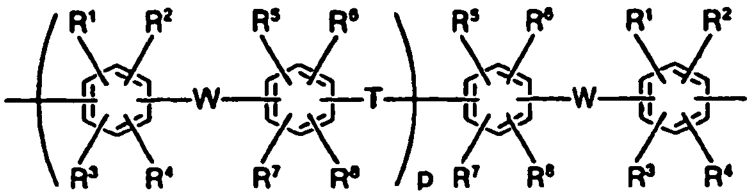 ----------- ( II )

(wherein $R^1$ to $R^8$, which may be the same or different, each represent at least one atom or group selected from the group consisting of a hydrogen atom, a fluorine atom, an alkyl group, a fluorine substituted alkyl group, an allyl group, an aryl group and a cyano group; W represents a divalent electron withdrawing group or a single bond; T represents a single bond or a divalent organic group and p represents 0 or a positive integer).

According to the present invention, the membrane-electrode structure for a solid polymer fuel cell having excellent power generation performance and durability can be obtained by using a polymer electrolyte membrane which consists of a copolymer having a constituent unit (A) represented by the general formula (I) and a constituent unit (B) represented by the general formula (II). Here, in order to obtain excellent power generation performance and durability, the constituent unit (B) represented by the general formula (II) should have a number average molecular weight measured by gel permeation chromatography in the range of 3,000 to 8,000. When the number average molecular weight of the constituent unit (B) represented by the general formula (II) is less than 3000, the molecular weight is too small and the backbone of the copolymer is susceptible to attack by radicals, which causes deterioration in the durability. On the other hand, when the number average molecular weight exceeds 8000, the hydrophobicity of the constituent unit (B) represented by the general formula (II) becomes excessive, the ion-conductivity decreases, and necessary power generation performance cannot be obtained.

The copolymer having the above-mentioned constituent unit (A) and the constituent unit (B) is preferably a block copolymer in which the constituent unit (A) and the constituent unit (B) are covalently bonded. If the copolymer is such a block copolymer, the copolymer can form a micro phase separation structure, and can improve ion conductivity.

The solid polymer fuel cell of the present invention is a solid polymer fuel cell having a membrane-electrode structure for a solid polymer fuel cell having a polymer electrolyte membrane sandwiched between a pair of catalyst-containing electrodes, wherein the polymer electrolyte membrane comprises a constituent unit (A) which has an ion conductive moiety consisting of a sulfonic acid group and is represented by the following general formula (I) and a constituent unit (B) consisting only of non-ion conductive moiety which has a number average molecular weight in the range of 3000 to 8000 measured by gel permeation chromatography and is represented by the following general formula (II).

The solid polymer fuel cell of the present invention employs a membrane-electrode structure having the above-mentioned polymer electrolyte membrane and thereby achieves excellent power generation performance and excellent durability.

BRIEF DESCRIPTION OF THE DRAWING

FIG. 1 is a schematic cross-sectional view showing an example of the membrane-electrode structure constructed

according to the present invention.

DETAILED DESCRIPTION OF THE PREFERRED EMBODIMENTS

Hereinbelow, embodiments of the present invention are described in more detail referring to the attached drawing.

The membrane-electrode structure of this embodiment consists of a pair of electrode catalyst layers 1 and 1, a solid polymer electrolyte membrane 2 sandwiched by the electrode catalyst layers 1 and 1, gas diffusion layers 3 and 3 laminated on each of the electrode catalyst layers 1 and 1, as shown in FIG. 1.

The electrode catalyst layer 1 consists of a catalyst and an ion-conductive polymer electrolyte.

The catalyst is preferably a supported catalyst containing platinum or a platinum alloy supported on a carbon material having developed fine pores. As a carbon material having developed fine pores, carbon black, activated carbon, etc. can be used preferably. Examples of the carbon black include channel black, furnace black, thermal black, acetylene black, and examples of the activated carbon include various materials obtained by carbonizing and activating various materials containing carbon atoms. Such carbon materials may be subjected to graphitization treatment and be used.

The catalyst may be platinum supported on carbon carrier, but stability and activity as an electrode catalyst can be further imparted by using a platinum alloy. As the platinum alloy, alloys of platinum and one or more metal selected from the group consisting of a platinum group metal other than platinum such as ruthenium, rhodium, palladium, osmium and iridium, iron, titanium, gold, silver, chromium, manganese, molybdenum, tungsten, aluminum, silicon, rhenium, zinc are preferable. The platinum alloy may contain an intermetallic compound of platinum and the metal alloyed with platinum.

In order to obtain a high output, the supported ratio of platinum or a platinum alloy (ratio of the mass of platinum or a platinum alloy to the total mass of the supported catalyst) is preferably in the range of 20 to 80 mass %, particularly 30 to 55 mass %. When the supported ratio is less than 20 mass %, sufficient output may not be obtained and when the supported ratio exceeds 80 mass %, particles of platinum or a platinum alloy may not be supported on the carbon material support with satisfactory dispersibility.

The primary particle size of platinum or a platinum alloy is preferably 1 to 20 nm, in order to obtain a highly active gas diffusion electrode, and particularly preferably 2 to 5 nm for securing a large surface area of platinum or a platinum alloy, which is preferable in respect of reaction activity. Platinum or a platinum alloy is preferably contained in the range of 0.1 to 1.0 $mg/cm^2$ in a catalyst particle.

In addition to the above-mentioned supported catalyst, the electrode catalyst layer 1 contains an ion-conductive polymer electrolyte having a sulfonic acid group. Usually, the supported catalyst is covered with the polymer electrolyte, and protons ($H^+$) move through a path where the polymer electrolyte is continuous.

As an ion-conductive polymer electrolyte having a sulfonic acid group, perfluoroalkylene sulfonic acid polymer compounds represented by Nafion (trade name) by E. I. DuPont de Nemours & Co., Flemion (trade name) by Asahi Glass Co., Ltd., Aciplex (trade name) by Asahi Kasei Corp., etc. can be used suitably. Besides the perfluoroalkylene sulfonic acid polymer compounds, ion-conductive polymer electrolytes mainly composed of aromatic hydrocarbon compounds described in this specification such as sulfonated polyarylene may be also used.

The solid polymer electrolyte membrane 2 consists of a polymer which has a repeating unit represented by the following general formula (1) comprising a polymer segment (A) as a constituent unit represented by the following general formula (I) which has an ion conductive moiety and a polymer segment (B) as a constituent unit represented by the following general formula (II) which is consisted only of a non-ion conductive moiety and has a number average molecular weight measured by gel permeation chromatography in the range of 3000 to 8000.

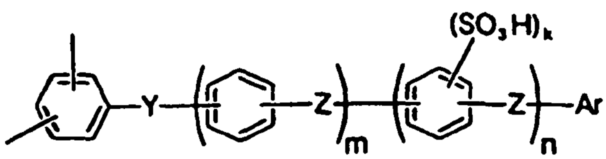 ............ (I)

In the general formula (I), Y represents a divalent electron withdrawing group. Specific examples of the electron-withdrawing group include -CO-, $-SO_2-$, -SO-, -CONH-, -COO-, $-(CF_2)_q-$ (q is an integer of 1 to 10), $-C(CF_3)_2-$. The electron-withdrawing group means here a group having a Hammett substituent constant of 0. 06 or more in the case of m-position to the phenyl group and 0.01 or more in the case of p-position to the phenyl group.

Z represents a divalent electron donating group, or a direct bond. Specific examples of the electron donating group include $-CH_2-$, $-C(CH_3)_2-$, -O-, -S-, -CH=CH-, -C≡C- and

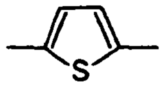 , 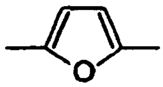 .

Ar represents an aromatic group having a substitutent represented by $-SO_3H$. Specific examples of the aromatic group include a phenyl group, a naphthyl group, an anthracenyl group, a phenanthryl group. A phenyl group and a naphthyl group are preferable among these aromatic groups.
k represents an integer of 0 to 10, preferably 0 to 2; 1 represents an integer of 0 to 10, preferably 0 to 2; and j represents an integer of 1 to 4.

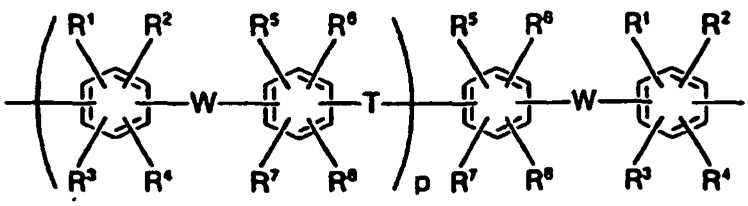
............ (II)

In the general formula (II), $R^1$ to $R^8$, which may be the same or different, each represent at least one atom or group selected from the group consisting of a hydrogen atom, a fluorine atom, an alkyl group, a fluorine substituted alkyl group, an allyl group, an aryl group and a cyano group.
Examples of the alkyl group include a methyl group, an ethyl group, a propyl group, a butyl group, an amyl group, a hexyl group, and a methyl group, an ethyl group, etc. are preferable. Examples of the fluorine substituted alkyl group include a trifluoromethyl group, a pentafluoroethyl group, a perfluoromethyl group, a perfluoropropyl group, a perfluorobutyl group, a perfluoropentyl group, and a perfluoro hexyl group, and a trifluoromethyl group, a pentafluoroethyl group, etc. are preferable. Examples of the allyl group include a propenyl group. Examples of the aryl group include a phenyl group, a pentafluorophenyl group, etc.
In the general formula (II), W represents a single bond or a divalent electron-withdrawing group; T represents a single bond or an organic group; p represents 0 or a positive integer and its maximum is 100 and preferably 10 to 80.

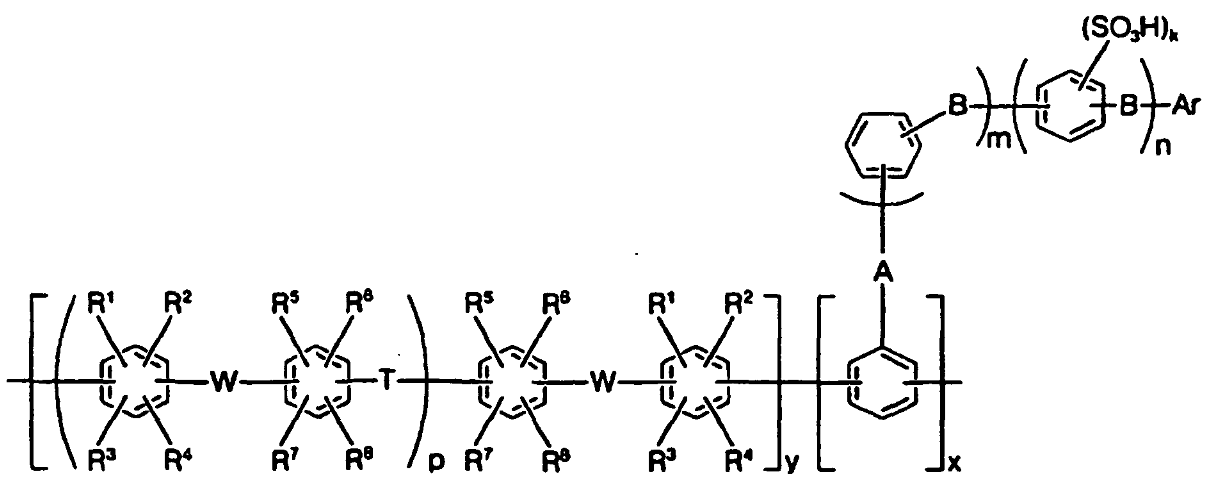
----------- (1)

In the general formula (1), W, T, Y, Z, Ar, m, n, k, p, and $R^1$ to $R^8$ each means the same as in the general formula (I) or the general formula (II) respectively. x and y express the molar ratio assuming x+y as 100 (mol %).
The copolymer having a polymer segment (A) and a polymer segment (B) is preferably a block copolymer which can form micro phase separation structure. As such a copolymer having a polymer segment (A) and a polymer segment (B), preferred are those having a structure in which-aromatic rings are covalent bonded through binding groups to form the backbone of the copolymer and the polymer segment (A) has an ion conductive moiety in its side chains.

When the backbone has such a structure in which aromatic rings are covalent bonded through binding groups, a solid polymer electrolyte membrane 2 excellent in mechanical strength and heat resistance can be obtained. In addition, since the backbone chain of the polymer segment (A) has an ion conductive moiety in its side chains, when a micro phase separation structure is formed, the ion conductive moieties will come gather to form a single phase, and the phase can contribute to improvement of the ion-conductivity.

Formation of the above-mentioned micro phase separation structure is largely governed by thermodynamic rule, and it is known that the composition of the matrix and the heat history after membrane formation are important in the phase separation structure. Particularly, in consideration of stabilization of the physical properties of the formed membrane, it is preferable to select a material which cannot be easily influenced by heat history, i.e., material with a high glass transition temperature. A block copolymer containing a structure in which aromatic rings are covalent bonded through binding groups as a backbone structure (polyarylene copolymer) is preferably selected also from this viewpoint.

The ion conductive moiety in the polymer segment (A) is suitably a sulfonic acid group from the viewpoint of stability and conduction efficiency of the matrix, but may be a phosphoric acid group. As for the position to which the ion conductive moieties are attached, it is more preferable to introduce a particular binding group or an atomic group as a side chain rather than directly introducing ion conductive moieties into the backbone in consideration of formation of the micro phase separation structure and mechanical strength. The copolymer having ion conductive moieties directly incorporated into its backbone may not readily form a micro phase separation structure, and thus may be unable to provide sufficient mechanical strength or to satisfy the basic characteristics required of the electrolyte membrane of a solid polymer fuel cell.

If the molecular weight of the polymer segment (B) which consists only of a non-ion-conductive moiety is increased, oxidation resistance (Fenton resistance) will be improved. Too large molecular weight, however, results in too large hydrophobicity, and the ion-conductivity of the polymer segment (A) which has an ion conductive moietymay be inhibited. Furthermore, even if the molecular weight is increased, improvement in oxidation-resistant is no longer observed when it surpasses a certain value. Therefore, the molecular weight of the polymer segment (B) which consists only of a non-ion conductive moieties should be controlled so that it does not inhibit the ion-conductivity of the polymer segment (A). Specifically, the number average molecular weight measured by gel permeation chromatography (GPC) is in the range of 3,000 to 8,000. When the molecular weight of the polymer segment (B) falls within the above-mentioned limits, the solid polymer electrolyte membrane 2 excellent in the balance of ion-conductivity and durability (oxidation resistance) can be obtained.

The polyarylene copolymer having a sulfonic acid group represented by the general formula (1) contains the polymer segment (A) represented by the general formula (I) in a ratio of 0.5 to 100 mol %, preferably 10 to 99.999 mol %, and the polymer segment (B) represented by the general formula (II) in a ratio of 99.5 to 0 mol %, preferably 90 to 0.001 mol %.

The polyarylene copolymer having a sulfonic acid group can be synthesized by copolymerizing a monomer containing a sulfonic ester group which can serve as the polymer segment represented by the above-mentioned general formula (I) and an oligomer which can serve as the polymer segment represented by the above-mentioned general formula (II) to prepare a polyarylene copolymer having a sulfonic ester group, and then hydrolyzing the polyarylene copolymer having a sulfonic ester group, thereby converting the sulfonic ester group into a sulfonic acid group.

Alternatively, the polyarylene copolymer having a sulfonic acid group can be synthesized by synthesizing polyarylene copolymer consisting of a polymer segment which does not contain a sulfonic acid group in the general formula (I) and an oligomer which can serve as the polymer segment represented by the above-mentioned general formula (II) beforehand and then sulfonating this polymer.

The monomer which can serve as a polymer segment having a sulfonic ester group in place of a sulfonic acid group in the general formula (I) may include, for example, a sulfonic ester represented by the following general formula (2) (hereinafter sometimes referred to as monomer (2)):

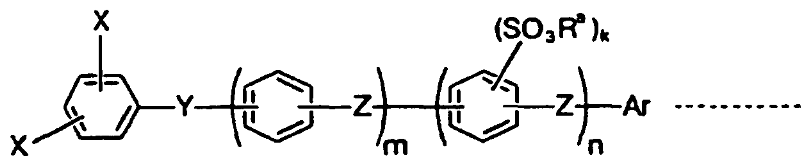

(2)

In the general formula (2), X represents an atom or a group selected from a halogen atom except fluorine (chlorine, bromine, iodine) , $-OSO_2G$ (wherein G represents an alkyl group, a fluorine substituted alkyl group or an aryl group); and Y, Z, m, n and k have the same meaning as Y, Z, m, n and k in the general formula (I) respectively.

$R^a$ represents a hydrocarbon group having 1 to 20, preferably 4 to 20 carbon atoms, and specific examples thereof include a methyl group, an ethyl group, an n-propyl group, an iso-propyl group, a tert-butyl group, an iso-butyl

group, an n-butyl group, a sec-butyl group, a neopentyl group, a cyclopentyl group, a hexyl group, a cyclohexyl group, a cyclopentylmethyl group, a cyclohexylmethyl group, an adamantyl group, an adamantylmethyl group, a 2-ethylhexyl group, a bicyclo[2.2.1]heptyl group, a bicyclo[2.2.1]heptylmethylgroup,a tetrahydrofurfuryl group, a 2-methylbutyl group, a 3,3-dimethyl-2,4-dioxolanmethyl group, and a linear hydrocarbon group such as a cyclohexylmethyl group, a branched hydrocarbon group, an alicyclic hydrocarbon group, a hydrocarbon group having a 5-membered heterocyclic ring. Among these, an n-butyl group, a neopentyl group, a tetrahydrofurfuryl group, a cyclopentyl group, a cyclohexyl group, a cyclohexylmethyl group, an adamantylmethyl group, and a bicyclo[2.2.1]heptylmethyl group are preferable, and particularly a neopentyl group is preferable.

Ar represents an aromatic group having a substitutent represented by $-SO_3R^b$, and specific examples thereof include a phenyl group, a naphthyl group, an anthracenyl group, a phenanthyl group as an aromatic group. Among these groups, a phenyl group and a naphthyl group are preferable.

The substitution group $-SO_3R^b$ substitutes on the aromatic group at one or two or more positions and when $-SO_3R^b$ substitutes at two or more positions, these substituent groups may be the same or different from each other.

Here, $R^b$ represents a hydrocarbon group having 1 to 20, preferably 4 to 20 carbon atoms, and specific examples thereof include the above-mentioned hydrocarbon groups having 1 to 20 carbon atoms. Among these, an n-butyl group, a neopentyl group, a tetrahydrofurfuryl group, a cyclopentyl group, a cyclohexyl group, a cyclohexylmethyl group, an adamantylmethyl group and a bicyclo[2.2.1] heptylmethyl group are preferable, and particularly a neopentyl group is preferable.

Specific examples of the sulfonic ester represented by the general formula (2) include the following compounds:

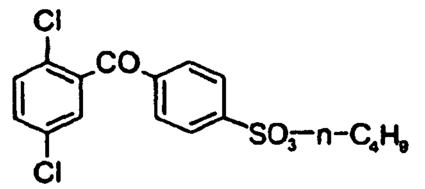
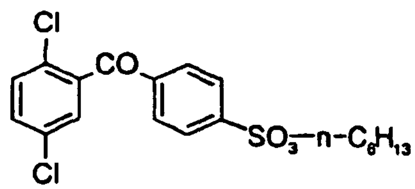
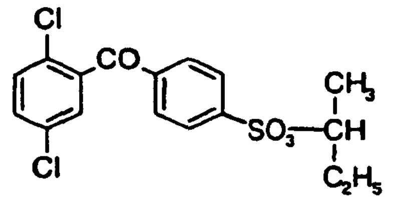
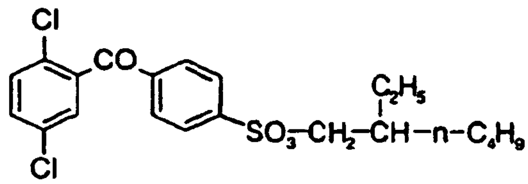
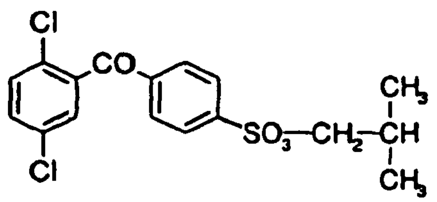
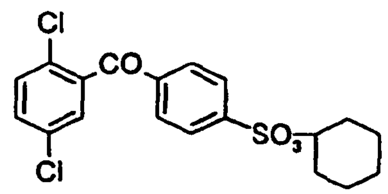
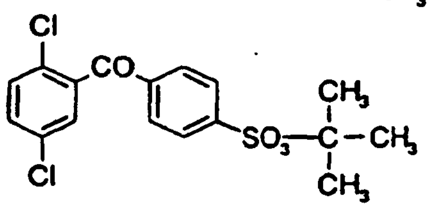
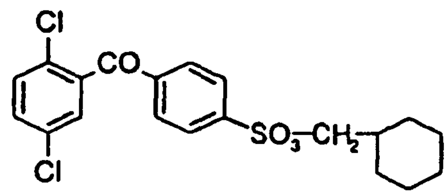

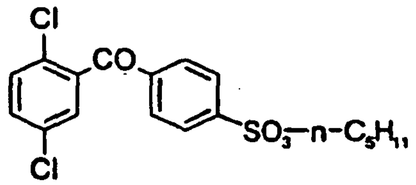

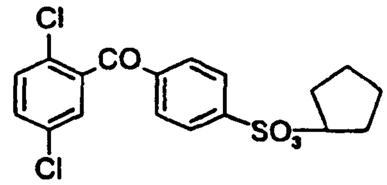

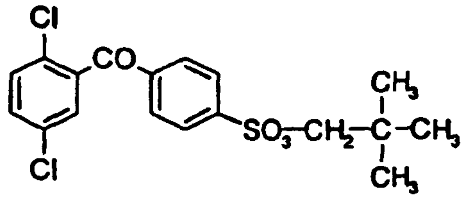

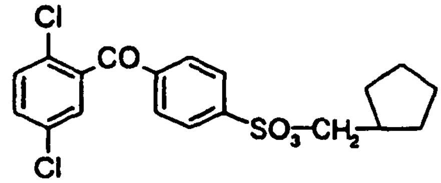

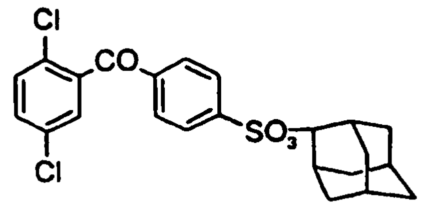

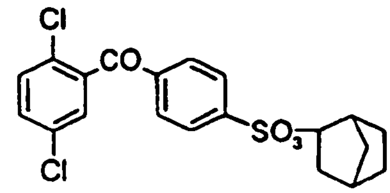

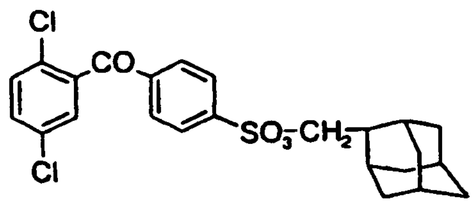

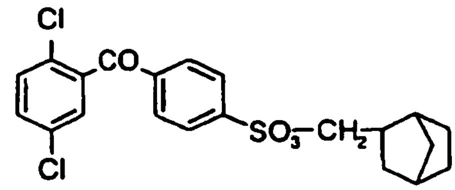

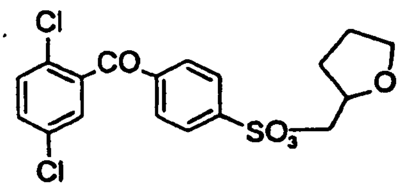

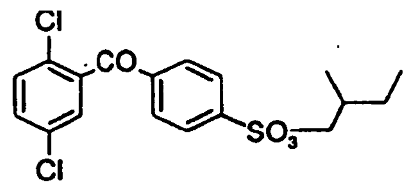

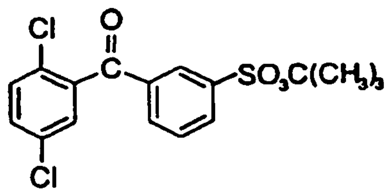

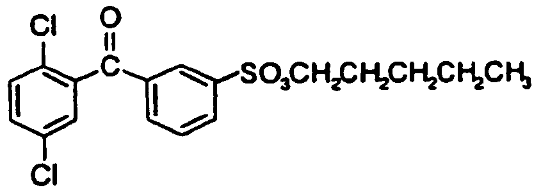

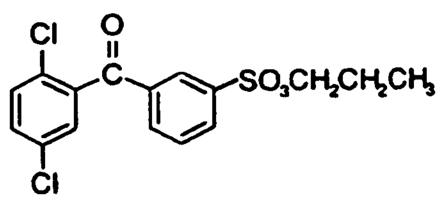

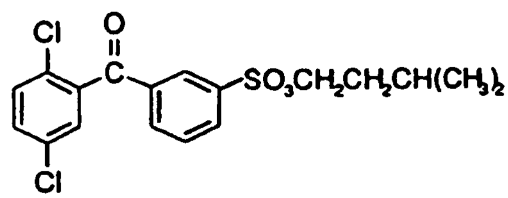

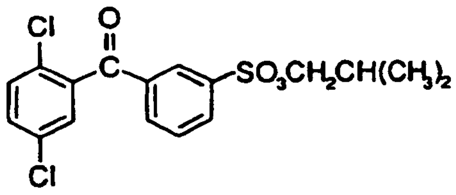

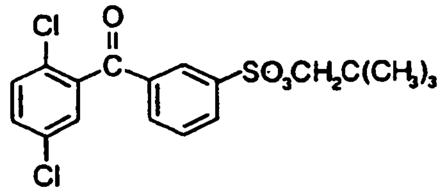

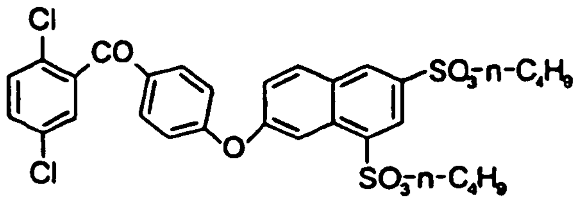

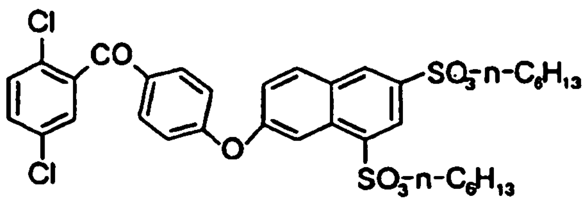

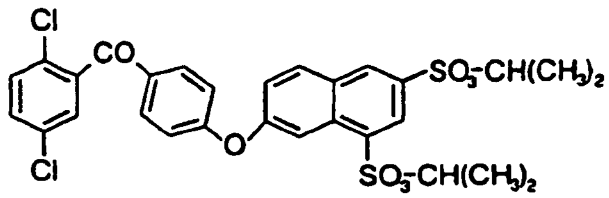

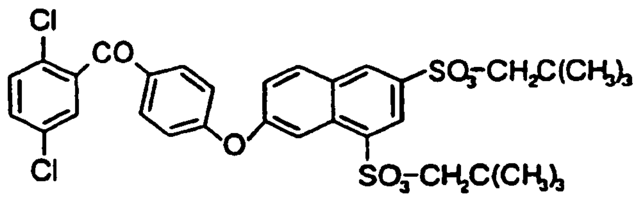

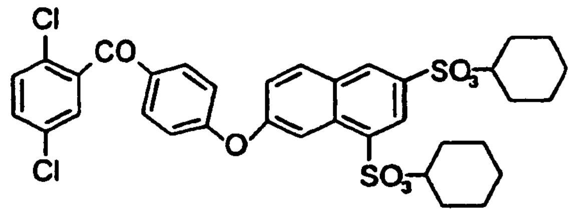

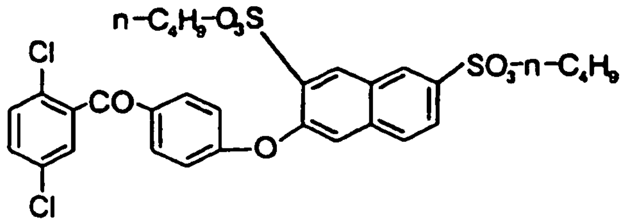

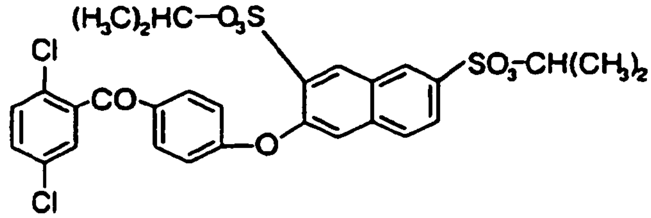

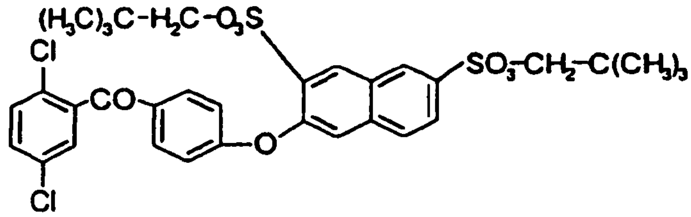

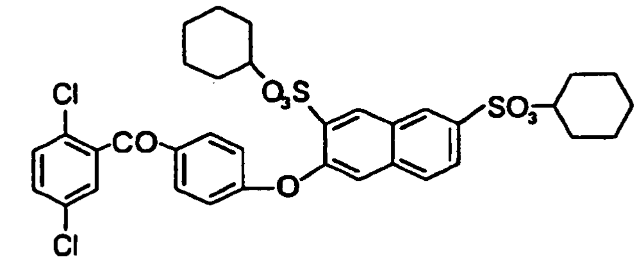

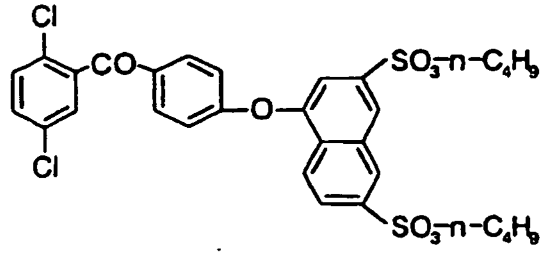

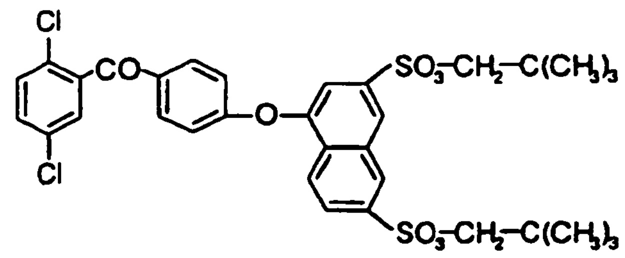

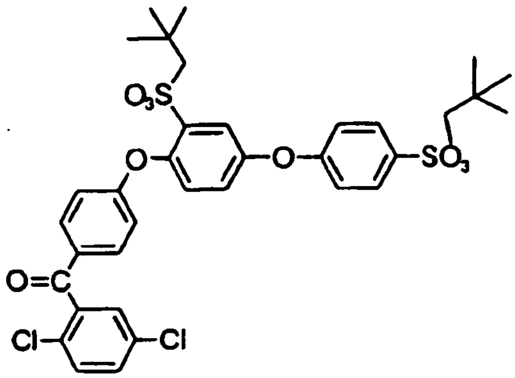

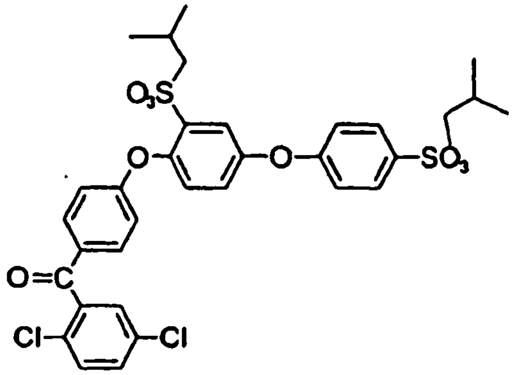

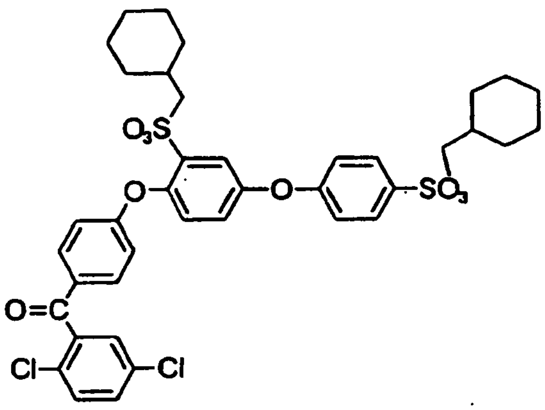

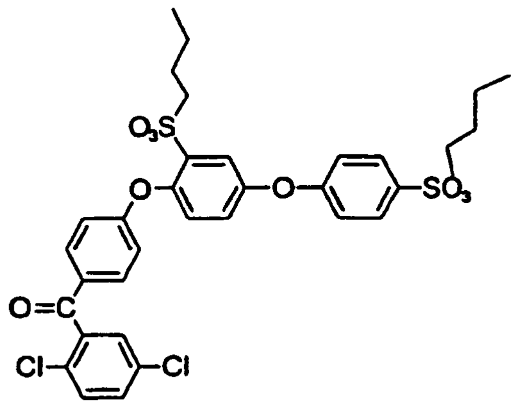

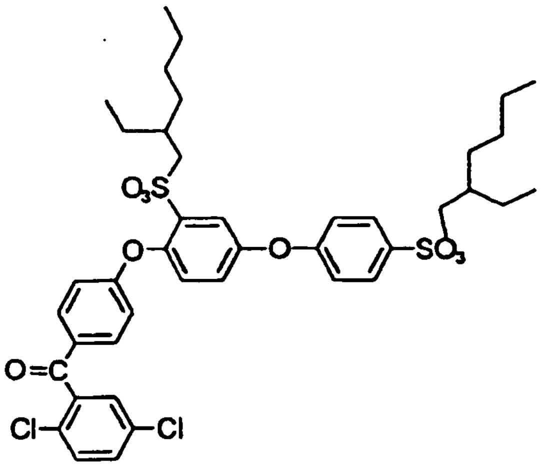

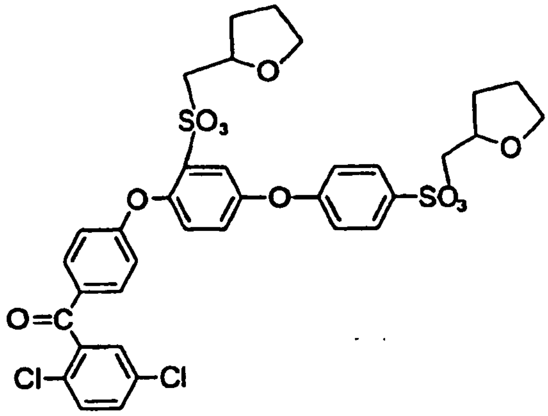

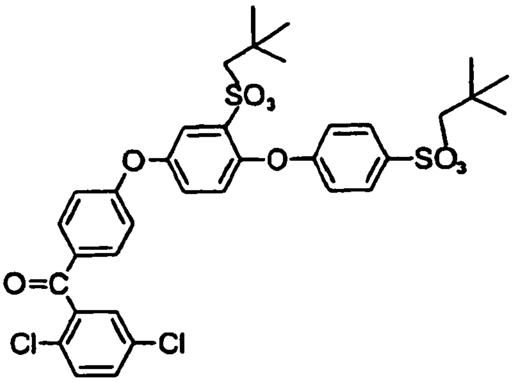

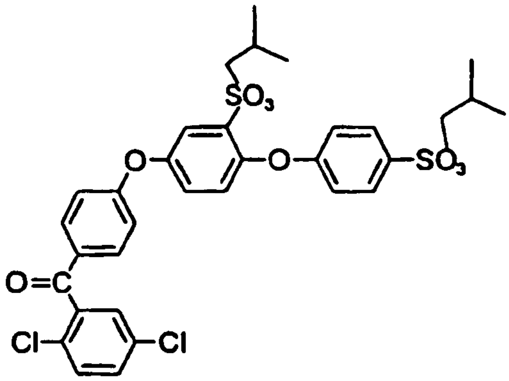

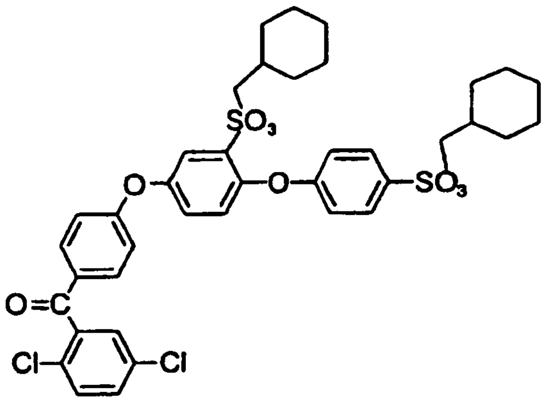

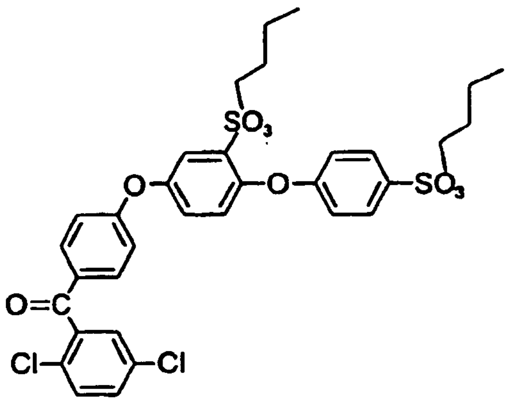

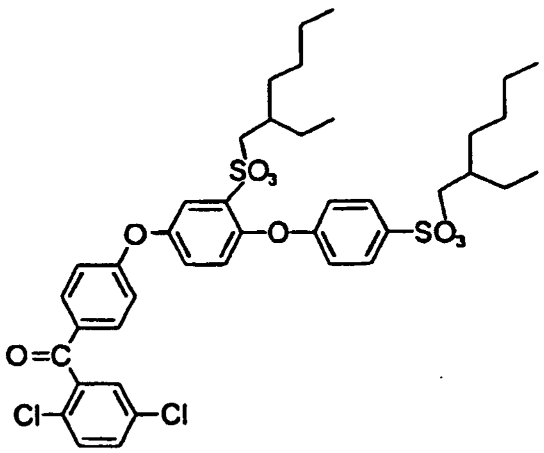

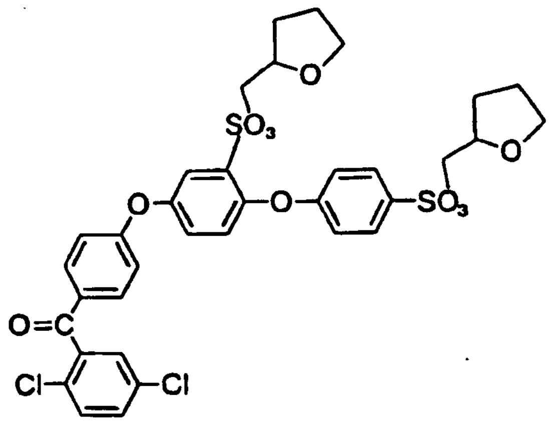

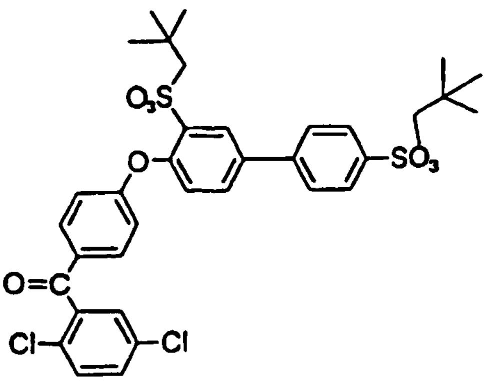

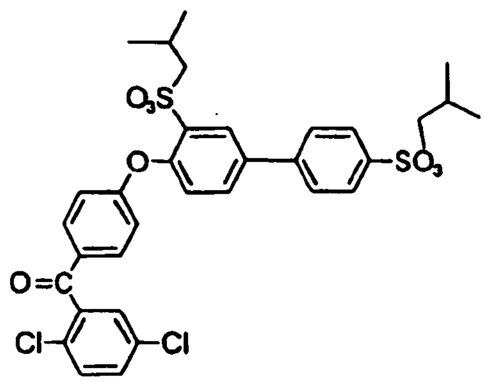

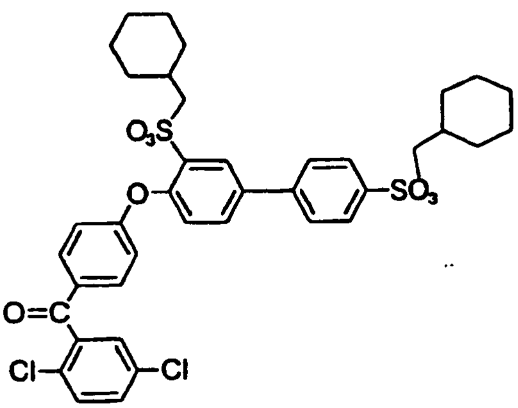

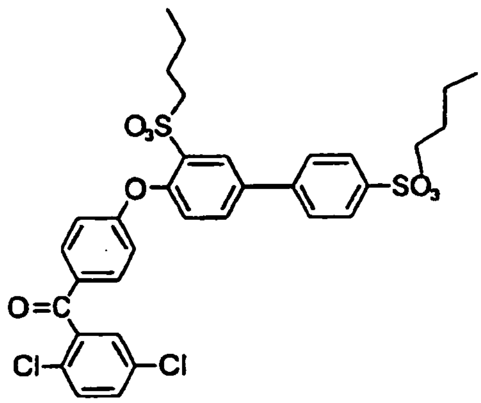

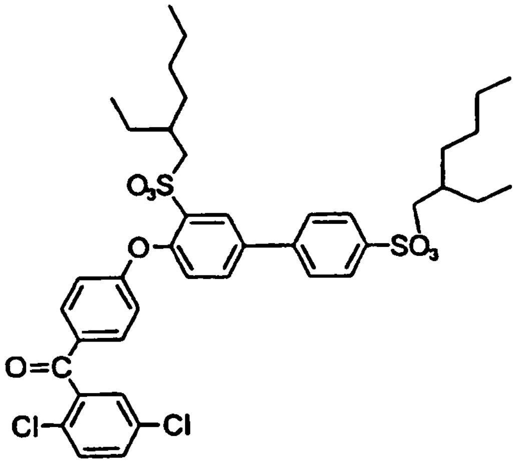

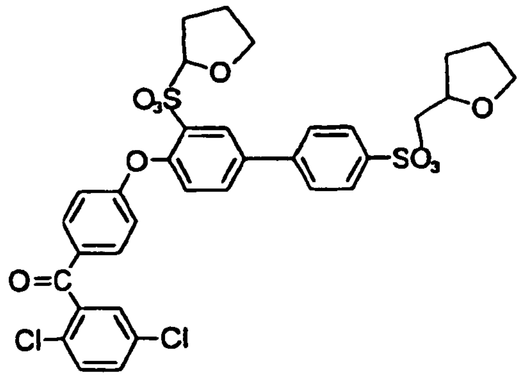

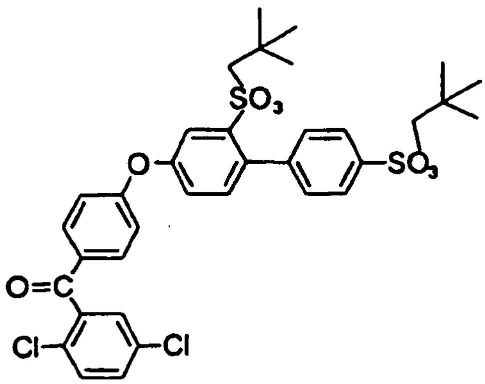

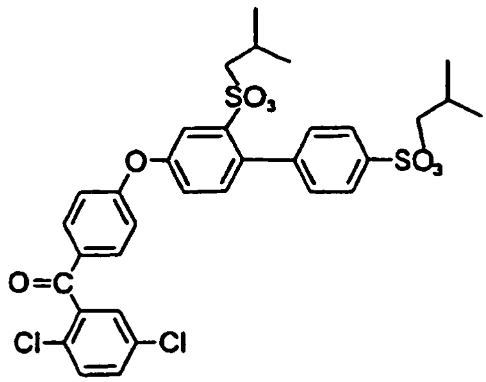

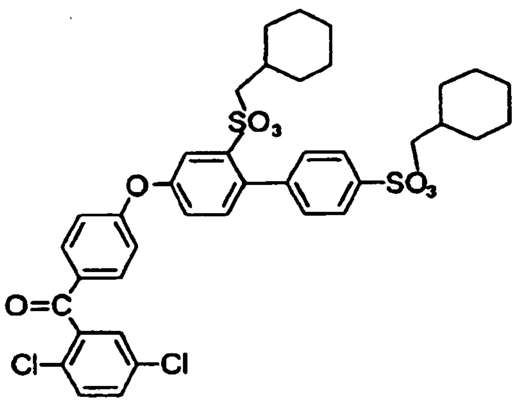

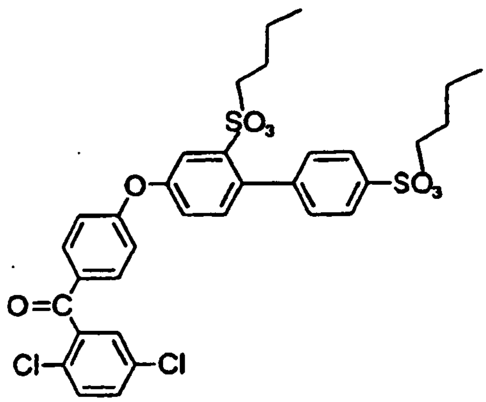

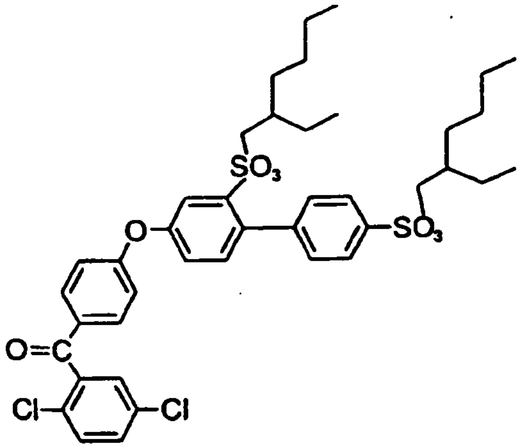

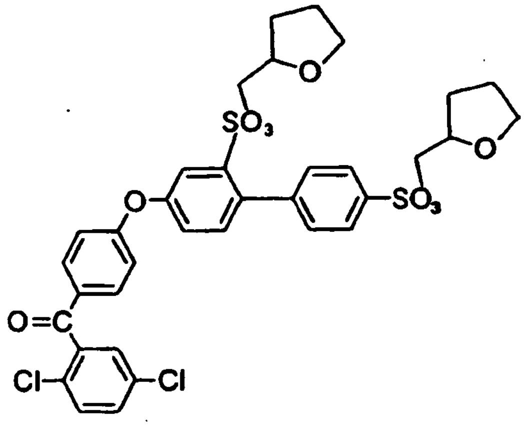

The sulfonic ester represented by the general formula (2) may include compounds in which a chlorine atom is replaced with a bromine atom, compounds in which -CO- is replaced with $-SO_2-$, and compounds in which a chlorine atom is replaced with a bromine atom, and -CO- is replaced with $-SO_2-$, in the compounds of the above-mentioned specific examples.

$R^b$ group in the general formula (2) is derived from a primary alcohol, and β carbon is preferably a tertiary or quaternary carbon from the points that stability in polymerization process is excellent and that neither polymerization inhibition nor cross-linking attributable to the generation of sulfonic acid resulted from de-esterification will not be caused, and it is still more preferable that these ester groups are derived from primary alcohols and P carbon is a quaternary carbon.

Specific examples the compound having no sulfonic acid group in the general formula (I) include the following compounds:

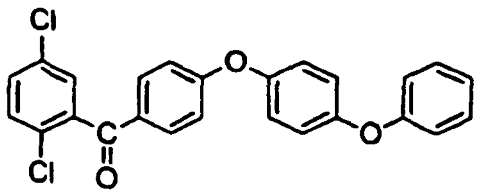

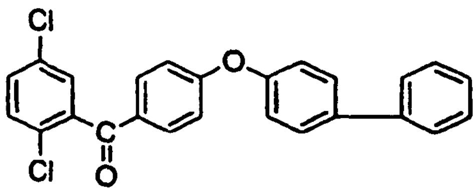

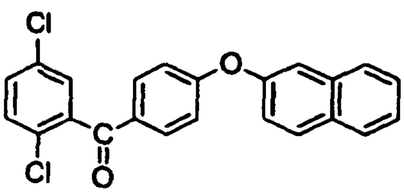

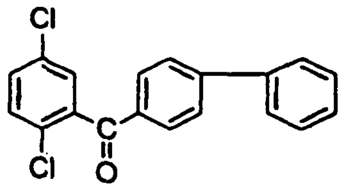

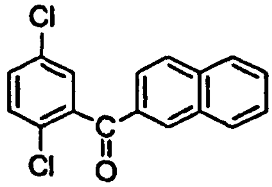

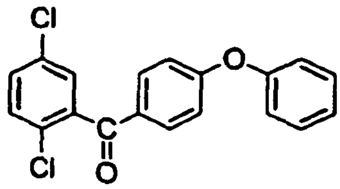

The compound having no sulfonic acid group in the general formula (I) may include compounds in which a chlorine atom is replaced with a bromine atom, compounds in which -CO- is replaced with $-SO_2-$, and compounds in which a chlorine atom is replaced with a bromine atom, and -CO- is replaced with $-SO_2-$, in the compounds of the above-mentioned specific examples.

The monomer which can serve as a polymer segment of the general formula (II) may include, for example, an oligomer represented by the following general formula (3) (hereinafter sometimes referred to as an oligomer (3)).

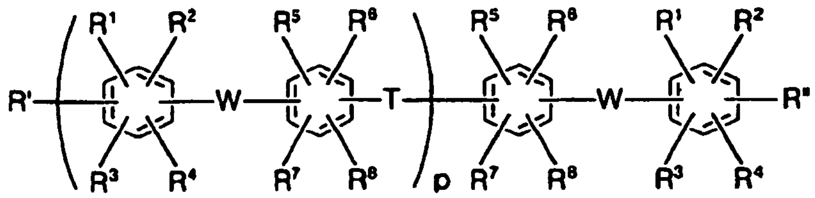 ............ (3)

In the general formula (3), R' and R' ', which may be the same or different, each represent an atom or a group selected from a halogen atom except fluorine (chlorine, bromine, iodine) , $-OSO_2Z$ (wherein Z represents an alkyl group, a fluorine substituted alkyl group or an aryl group). The alkyl group which Z represents may include a methyl group and an ethyl group, etc. and the fluorine substituted alkyl group may include a trifluoromethyl group, and the aryl group may include a phenyl group, a p-tolyl group, etc.

$R^1$ to $R^8$, which may be the same or different, each represent at least one atom or group selected from the group consisting of a hydrogen atom, a fluorine atom, an alkyl group, a fluorine substituted alkyl group, an allyl group, an aryl group and a cyano group.

The alkyl group may include a methyl group, an ethyl group, a propyl group, a butyl group, an amyl group, and a hexyl group, and a methyl group, an ethyl group, etc. are preferable. The fluorinesubstituted alkylgroup mayinclude atrifluoromethyl group, a pentafluoroethyl group, a perfluoroethyl group, a perfluoropropyl group, a perfluorobutyl group, a perfluoropentyl group, and perfluorohexyl group, and a trifluoromethyl group, a pentafluoroethyl group, etc. are preferable.

W represents a divalent electron withdrawing group or a single bond, and the electron-withdrawing group may include the same groups as those described for the general formula (I). T is a divalent organic group or single bond, and the organic group may be an electron-withdrawing group or may be an electron donating group. The electron-withdrawing group and electron donating group may include the same groups as those described for the general formula

(I). p is 0 or a positive integer and the maximum thereof is 100, preferably 10 to 80.

The compound represented by the general formula (3) may include 2,2-bis[4-{4-(4-chlorobenzoyl)phenoxy)phenyl]-1,1,1,3,3,3 -hexafluoropropane and bis[4-{4-(4-chlorobenzoyl)phenoxy}phenyl]sulfone and the following compounds:

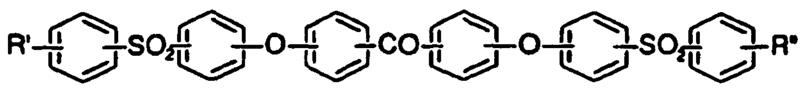

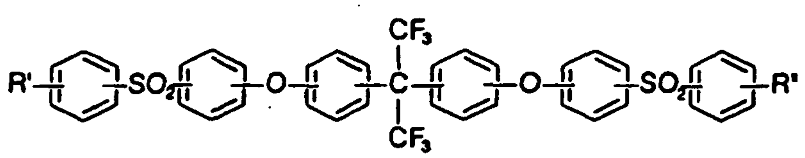

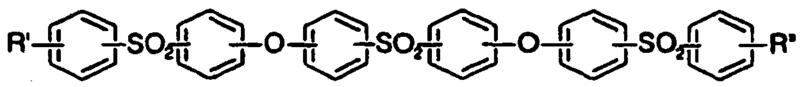

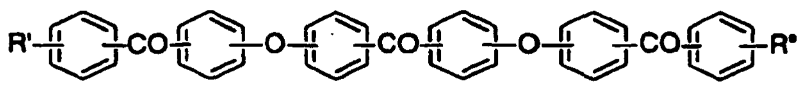

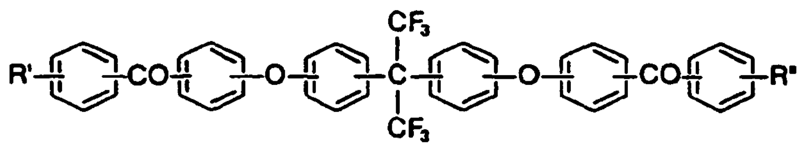

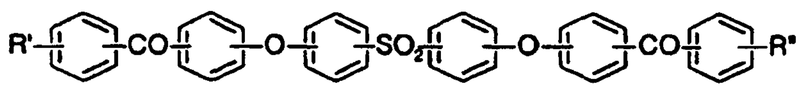

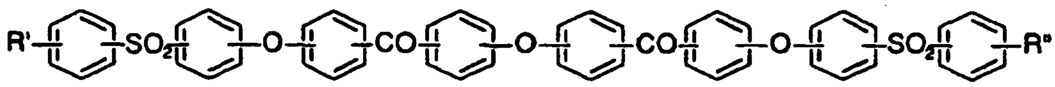

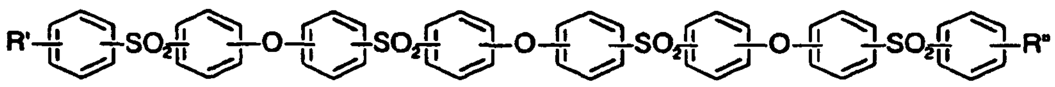

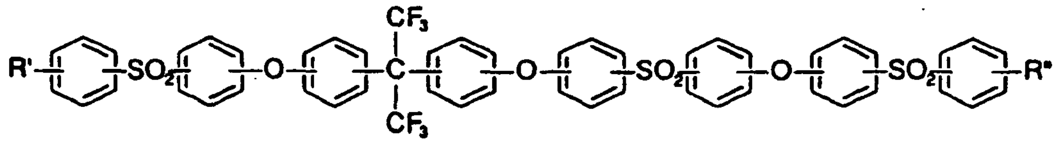

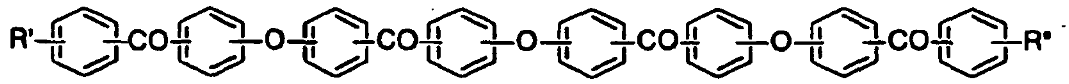

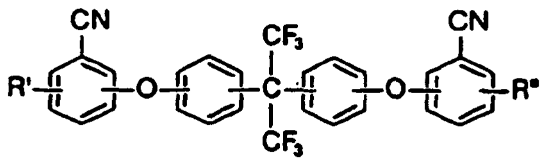

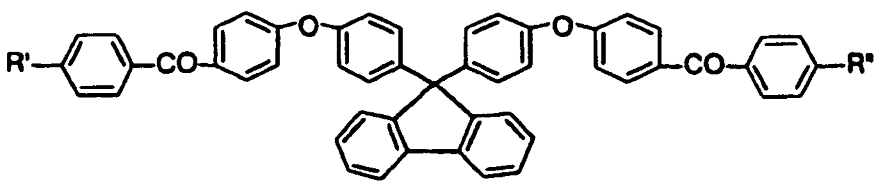

The oligomer represented by the general formula (3) can be synthesized, for example, by the method shown below.

First, in order to convert a bisphenol having an electron-withdrawing group as a linkage to a corresponding alkaline metal salt of the bisphenol, an alkaline metal such as lithium, sodium, or potassium, an alkaline metal hydride, a alkaline metal hydroxide, or an alkaline metal carbonate and the like is added in a polar solvent having a high dielectric constant such as N-methyl-2-pyrrolidone, N,N-dimethylacetamide, sulfolane, diphenyl sulfone, or dimethylsulfoxide. The alkaline metal is reacted with the phenolic hydroxyl group in an excessive amount, usually used in 1.1 to 2 equivalents, and preferably in 1.2 to 1.5 equivalents.

On this occasion, a solvent which can form an azeotrope with water, such as benzene, toluene, xylene, hexane, cyclohexane,octane,chlorobenzene,dioxane,tetrahydrofuran, anisole, and phenetole are made to be present, and an aromatic dihalide compound substituted with a halogen atom such as fluoride and chlorine and activated with an electron-withdrawing group are reacted. The aromatic dihalide compound may include 4,4'-difluorobenzophenone, 4,4'-dichlorobenzophenone, 4,4'-chlorofluorobenzophenone, bis(4-chlorophenyl)sulfone, bis(4-fluorophenyl)sulfone, 4-fluorophenyl-4'-chlorophenylsulfone, bis(3-nitro-4-chlorophenyl)sulfone, 2,6-dichlorobenzonitrile, 2,6-difluorobenzonitrile, hexafluorobenzene, decafluorobiphenyl, 2,5-difluorobenzophenone, 1,3-bis(4-chlorobenzoyl)benzene, etc. The aromatic dihalide compound is preferably a fluorine compound in view of reactivity, but in consideration of aromatic coupling reaction subsequently performed, it is preferable to design an aromatic nucleophilic substitution reaction so that there may be a chlorine atom at the end.

The aromatic dihalide compound activated with the above-mentioned electron-withdrawing group is used in an amount of 2 to 4 times mol, preferably 2.2 to 2.8 times mol to the bisphenol. An alkaline metal salt of bisphenol may be formed prior to the aromatic nucleophilic substitution reaction. The reaction temperature is in the range of 60 to 300°C, preferably 80 to 250°C. The reaction time is 15 minutes to 100 hours, preferably 1 to 24 hours.

In the most preferable method, as shown in the following formula, a chlorofluoro compound which has a halogen atom and another halogen atom different in reactivity is used as an aromatic dihalide compound activated with the above-mentioned electron-withdrawing group. By using such a chlorofluoro compound, nucleophilic substitution reaction occurs preferentially between the fluorine atom and a phenoxide, the object activated chlorine-ended compound can be conveniently obtained.

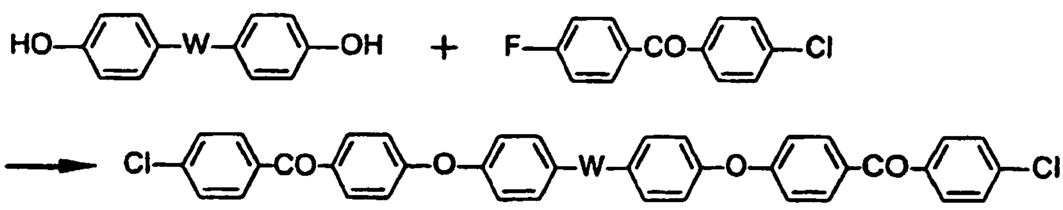

In the formula, W has the same meaning as in the general formula (3).

A bending compound which has the target electron-withdrawing group and an electron donating group may be synthesized by combining a nucleophilic substitution reaction and an electrophilic substitution reaction (see, for example, Japanese Patent Laid-open Publication-No. 2-159).

Specifically, the aromatic dihalide compound activated by the electron-withdrawing group may include the above-mentioned compounds. Although the phenol compound may be substituted, an unsubstituted compound is preferable from the viewpoint of heat resistance and bending properties. The phenol compound may be preferably used as an alkaline metal salt in the substitution reaction thereof, and the alkali metal compound which can be used may include the above-mentioned compounds. The amount to be used is 1.2 to 2 times mol for one mol of phenol. The above-mentioned polar solvent or solvent which can form an azeotrope with water can be used in the reaction.

A compound in which p in the general formula (3) is two or more can be obtained, for example, by performing a substitution reaction of a compound having a combination of a bisphenol to be used as the source of an ether oxygen which is the electron donating group T in the general formula (3), and at least one group selected from -CO-, $-SO_2-$ and $-C(CF_3)_2$ which are electron-withdrawing groups W, specifically, an alkaline metal salt of bisphenol such as 2,2-bis(4-hydroxyphenyl)-1,1,1,3,3,3-hexafluoropropane, 2,2-bis(4-hydroxyphenyl)ketone,
2, 2-bis (4-hydroxyphenyl) sulfone, with an excessive amount of an active aromatic halogenated compound such as 4,4-dichlorobenzophenone and bis(4-chlorophenyl)sulfone in the presence of a polar solvent such as N-methyl-2-pyrrolidone, N,N-dimethylacetamide and sulfolane, to effect the polymerization following the synthetic technique of the above-mentioned monomer. Examples of such a compound include the following compounds:

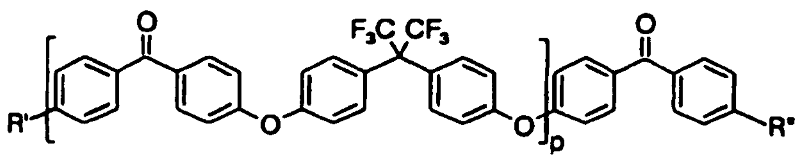

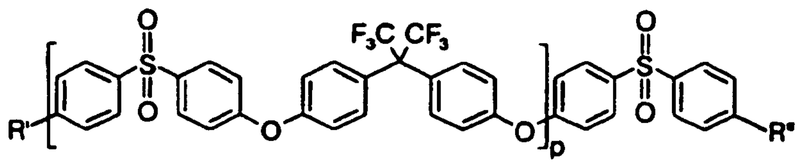

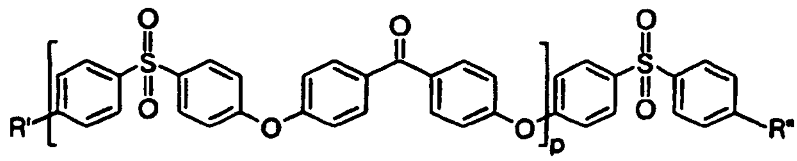

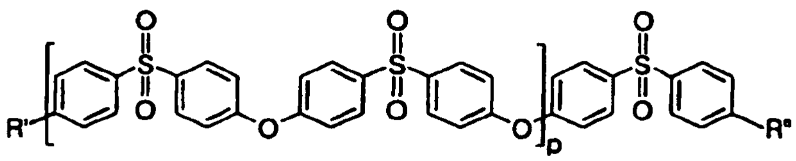

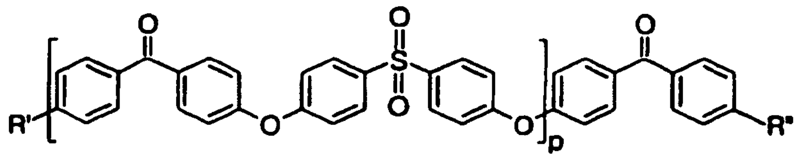

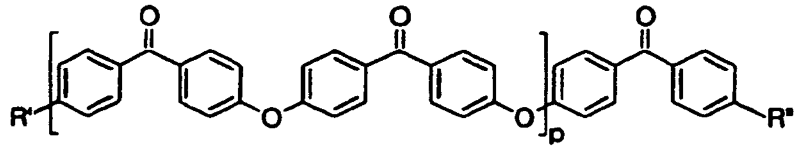

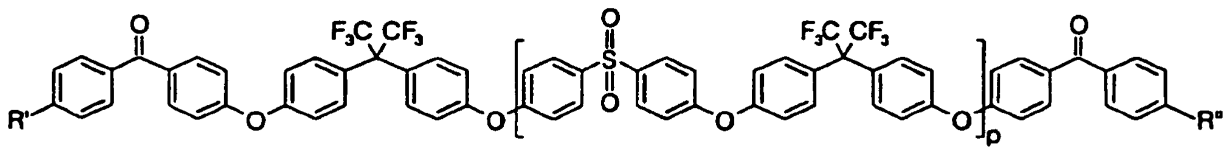

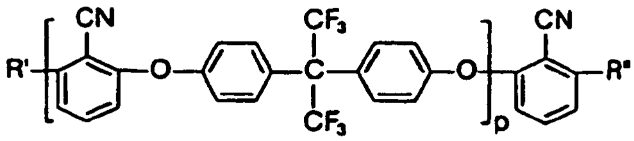

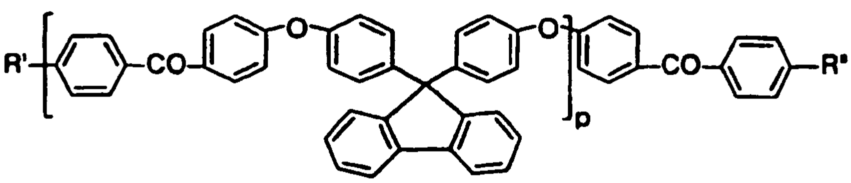

In these compounds, p is 0 or a positive integer and the maximum thereof is usually 100, preferably 10 to 80.

The polyarylene copolymer which has a sulfonic ester group can be synthesized by reacting the monomer (2) and the oligomer (3) in the presence of a catalyst.

The catalyst used at this step is a catalyst system containing a transition metal compound, and as such a catalyst system comprises

(i) a transition metal salt and a compound which serves as a ligand (hereinafter referred to as "ligand component"), or a transition metal complex (including a copper salt) in which the transition metal is coordinated by ligands; and
(ii) a reducing agent
as essential moieties and a "salt" may be added to further accelerate the polymerization speed.

Here the transition metal salt may include nickel chloride and nickel bromide, etc.

The ligand component may include triphenylphosphine, 2,2'-bipyridine etc. A single ligand component compound may be used alone or two or more kinds of compounds may be used in combination.

The transition metal complex having coordinating ligands may include nickel chloride bis(triphenylphosphine) and nickel chloride (2,2'-bipyridine).

The reducing agent which can be used for the above-mentioned catalyst system may include zinc, magnesium, manganese, etc. These reducing agents can be further activated by contacting them with an acid such as organic acid.

The "salt" used for the above-mentioned catalyst system may include sodium bromide, sodium iodide, potassium bromide, tetraethylammonium bromide, tetraethylammonium iodide, etc.

As for the ratio to be used of each moiety, the transition metal or transition metal complex is contained in an amount usually of 0.0001 to 10 mol and preferably 0.01 to 0.5 mol for one mol of totals of the above-mentioned monomers

(total of the monomer (2) and the oligomer (3)). If the amount is less than 0.0001 mol, polymerization reaction may not fully proceed and if it exceeds 10 mol on the other hand, the molecular weight of the obtained polyarylene copolymer may be decreased.

In the above-mentioned catalyst system, when a transition metal salt and a ligand component are used, the ratio to be used of the ligand component is usually 0.1 to 100 mol, preferably 1 to 10 mol for one mol of the transition metal salt. If the amount is less than 0.1 mol, catalyst activity may become insufficient and if it exceeds 100 mol on the other hand, the molecular weight of the obtained polyarylene copolymer may be decreased.

The ratio to be used of the reducing agent is usually 0.1 to 100 mol, preferably 1 to 10 mol for one mol of the total monomers. If the amount is less than 0.1 mol, polymerization reaction may not fully proceed and if it exceeds 100 mol on the other hand, purification of the obtained polyarylene copolymer may be difficult.

Furthermore, when a "salt" is used, the ratio to be used thereof is usually 0.001 to 100 mol, preferably 0.01 to 1 mol for one mol of the total monomers. If the amount is less than 0. 001 mol, the effect of accelerating polymerization rate may be insufficient and if it exceeds 100 mol on the other hand, purification of the obtained polyarylene copolymer may be difficult.

As a polymerization solvent which can be used in the reaction of the monomer (2) and the oligomer (3), tetrahydrofuran, N,N-dimethylformamide, N,N-dimethylacetamide, N-methyl-2-pyrrolidone, N,N'-dimethylimidazolidinone are preferable. These polymerization solvents are preferably used after fully dried.

The concentration of the total of the above-mentioned monomers in the polymerization solvent is usually 1 to 90% by weight, preferably 5 to 40 % by weight. The polymerization temperature at the time of carrying out polymerization is usually 0 to 200°C, preferably 50 to 120°C. The polymerization time is usually 0.5 to 100 hours, preferably 1 to 40 hours.

The polyarylene copolymer having a sulfonic ester group obtained by using the monomer (2) can be converted to a polyarylene copolymer having a sulfonic acid group by hydrolyzing the sulfonic ester group into a sulfonic acid group.

The method of hydrolysis may include

(i) a method comprising adding the polyarylene copolymer having a sulfonic ester group to an excessive amount of water or alcohol containing a little amount of hydrochloric acid and agitating for more than 5 minutes;
(ii) a method comprising reacting the polyarylene copolymer having a sulfonic ester group in trifluoroacetic acid at a temperature of about 80 to 120°C for about 5 to 10 hours; and
(iii) a method comprising reacting the polyarylene copolymer at a temperature of about 80 to 150°C for about 3 to 10 hours in a solution which contains 1 to 3 times mol of lithium bromide for one mol of sulfonic ester group ($-SO_3R^b$) of the polyarylene copolymer having a sulfonic ester group, for example, a solution of N-methyl-2-pyrrolidone, etc., and adding hydrochloric acid etc.

The polyarylene copolymer having a sulfonic acid group can be also synthesized by carrying out copolymerization of the above-mentioned oligomer (3) and the monomer which does not have a sulfonic acid group in the general formula (I) to synthesize a polyarylene copolymer having no sulfonic acid group beforehand and sulfonating this polyarylene copolymer. In this case, the polyarylene copolymer having a sulfonic acid group can be obtained by preparing a polyarylene copolymer which does not have a sulfonic acid group following a method similar to the above-mentioned synthesis method, and then introducing a sulfonic acid group using a sulfonating agent.

The method of introducing a sulfonic acid group is not particularly limited, and can be performed by a generally used method. For example, a polyarylene copolymer which does not have the above-mentioned sulfonic acid group as mentioned above may be sulfonated with a conventional sulfonating agent such as sulfuric anhydride, fuming sulfuric acid, chlorosulfonic acid, sulfuric acid and sodium hydrogensulfite in the presence or absence of a solvent under conventional conditions (see Polymer Preprints, Japan, Vol. 42, No.3, p.730 (1993) ; Polymer Preprints, Japan, Vol.43, No. 3, p.736 (1994); Polymer Preprints, Japan, Vol.42, No.7, p.2490-2492 (1993)).

Examples of the solvent used in the sulfonation reaction may include hydrocarbon solvents such as n-hexane, ether solvents such as tetrahydrofuran and dioxane, aprotic polar solvents such as dimethylacetamide, dimethylformamide and dimethylsulfoxide, halogenated hydrocarbon solvents such as tetrachloro ethane,dichloro ethane, chloroform and methylene chloride, etc. Although the reaction temperature is not particularly limited, it is usually -50 to 200°C, preferably -10 to 100°C. The reaction time is usually 0. 5 to 1,000 hours, preferably 1 to 200 hours.

The amount of sulfonic acid groups in the polyarylene copolymer having a sulfonic acid group prepared by a method as mentioned above is usually 0.3 to 5 meq/g, preferably 0.5 to 3 meq/g and still more preferably 0.8 to 2.8 meq/g. If the amount is less than 0.3 meq/g, proton conductivity is low and impractical while it exceeds 5 meq/g, water resistance may be decreased.

The above-mentioned amount of sulfonic acid groups may be adjusted by changing the kinds, using ratio and combination of the monomer (2) and oligomer (3).

The molecular weight of the thus obtained polyarylene copolymer having a sulfonic acid group is 10, 000 to 1 million, preferably 20, 000 to 800, 000 in terms of polystyrene conversion weight average molecular weight measured

by gel permeation chromatography (GPC). When the molecular weight of the polyarylene copolymer having a sulfonic acid group is less than 10,000, coatability is insufficient, for example, crack may occur in the formed membrane and the strength is also not satisfactory. On the other hand, when the molecular weight exceeds 1 million, solubility will become insufficient and the solution viscosity will become high, which causes problems of poor processability and the like.

The solid polymer electrolyte membrane 2 can be prepared by using a polymer electrolyte which consists of a polyarylene copolymer having a sulfonic acid group mentioned above and shaping it in the form of a film.

The method for preparing a film with a polymer electrolyte mentioned above includes, for example, a casting method, in which the polymer electrolyte is applied on the substrate by casting. In the casting method, although the solvent that dissolves the polyarylene copolymer having a sulfonic acid group is not particularly limited, examples thereof include aprotic polar solvents such as γ-butyrolactone, dimethylacetamide, dimethylformamide, N-methyl-2-pyrrolidone, dimethylsulfoxide, and dimethyl urea. An alcoholic solvent such as methanol, ethanol, n-propyl alcohol, iso-propyl alcohol and 1-methoxy-2-propanol may be further mixed in the above-mentioned solvent.

The substrate is not particularly limited as long as it is used for usual solution casting method, and for example, a substrate such as those made of a plastic and metal can be used, and a substrate made of a thermoplastic resin such as polyethylene terephthalate (PET) film can be used preferably.

Although the concentration of the polyarylene copolymer having a sulfonic acid group may vary depending on the molecular weight of the polyarylene copolymer having a sulfonic acid group, it is usually 5 to 40% by weight, preferably 7 to 25 % by weight. If the concentration is less than 5 % by weight, it is hard to form a thick membrane, and easy to generate a pinhole. On the other hand, when it exceeds 40 % by weight, the solution viscosity is too high, and it is hard to form a membrane and the surface thereof may lack in surface flatness.

Although the solution viscosity of the polyarylene copolymer having a sulfonic acid group may vary depending on the molecular weight and solid concentration of the polyarylene copolymer having a sulfonic acid group, it is usually in the range of 2,000 to 100,000 mPa·s, preferably 3,000 to 50,000 mPa·s. If the solution viscosity is less than 2,000 mPa·s, the residential properties of the solution under processing may be poor, and may flow out of the substrate surface. On the other hand, when the solution viscosity exceeds 100,000 mPa·s, the viscosity may be too high, and extrusion through the die may not be able to be performed, and film formation by the casting method may become difficult.

After the film formation by the casting method, the non-dried film is dried at 30 to 160°C, preferably at 50 to 150°C for 3 to 180 minutes, preferably 5 to 120 minutes, a membrane can be obtained. The dried membrane thickness of the membrane obtained by the above method is usually 10 to 100 μm, preferably 20 to 80 μm.

The solid polymer electrolyte membrane 2 may contain an antioxidant, preferably, a hindered phenol compound having a molecular weight of 500 or more, and the durability as a solid polymer electrolyte membrane 2 can be further improved by containing the antioxidant.

The hindered phenol compound which can be used for the solid polymer electrolyte membrane 2 may include pentaerythrityl-tetrakis
[3-(3,5-di-t-butyl-4-hydroxyphenyl)propionate] (IRGANOX 1010 (trade name) , product of Ciba Specialty Chemicals, Inc.), N,N-hexamethylene bis(3,5-di-t-butyl-4-hydroxyhydrocinnamamide) (IRGANOX 1098 (trade name), product of Ciba Specialty Chemicals, Inc.),
1,3,5-trimethyl-2,4,6-tris(3,5-di-t-butyl-4-hydroxybenzyl ) benzene (IRGANOX 1330 (trade name), product of Ciba Specialty Chemicals, Inc.) etc.

The hindered phenol compound having a molecular weight of 500 or more is preferably used in an amount of 0.01 to 10 weight part for 100 weight parts of the polyarylene having a sulfonic acid group.

In this embodiment, the membrane-electrode structure may be only consisted of the electrode catalyst layers 1 and 1 of anode and cathode, and the solid polymer electrolyte membrane (proton conductive membrane) 2 which is sandwiched by the electrode catalyst layers 1 and 1, it is more preferable that the gas diffusion layer 3 made of a conductive porous material such as carbon paper or carbon cloth is disposed on the outer side of the electrode catalyst layers 1 for both the anode and cathode. This conductive porous material may be subjected to water-repelling processing. Furthermore, the gas diffusion layer 3 may have a primer layer imparted with water-repelling properties by; for example, applying a slurry of a mixture of carbon black and poly tetrafluoroethylene (PTFE) particles. In this specifications, if a gas diffusion layer 3 is provided, the gas diffusion layer 3 and the electrode catalyst layer 1 as whole is referred to as the electrode since the gas diffusion layer 3 functions also as a electric current collector.

In a solid polymer fuel cell comprising a membrane-electrode structure shown in FIG. 1, gas which contains oxygen is supplied to the cathode, while gas which contains hydrogen is supplied to the anode. Specifically, a separator in which slots used as passages of the gas flow are formed is disposed on the outer side of the both electrodes (gas diffusion layer 3) of membrane-electrode structures, and the gas used as fuel is supplied to the membrane-electrode structure by passing the gas to through the passages of the gas.

As a method of preparing the membrane-electrode structure shown in FIG. 1, various kinds of methods, such as a method comprising forming the electrode catalyst layer 1 directly on the solid polymer electrolyte membrane 2 and sandwiching this with the gas diffusion layer 3 if needed, a method comprising forming the electrode catalyst layer 1 on

the substrate used as the gas diffusion layers 3 such as carbon paper and joining this to the solid polymer electrolyte membrane 2, and a method comprising forming the electrode catalyst layer 1 on the plate, transferring this layer on the solid polymer electrolyte membrane 2, separating the layer off the plate and sandwiching the layer between the membrane and the gas diffusion layer 3 if needed, may be used.

As a method of preparing the electrode catalyst layer 1, conventional methods comprising using a dispersion in which the supported catalyst and the perfluoroalkylene sulfonic acid polymer compound having a sulfonic acid group is dispersed in a dispersion medium and (adding a water repellent, a pore forming agent, a thickening agent, a dilution solvent, etc. if needed) and forming the layer on the solid polymer electrolyte membrane 2, the gas diffusion layer 3 or a plate by atomization,application,filtration,etc.Ifthe electrode catalyst layer 1 is not directly not formed on the solid polymer electrolyte membrane 2, it is preferable to join the electrode catalyst layer 1 and the solid polymer electrolyte membrane 2 by hotpress method, adhesive method, etc. (see, for example, Japanese Patent Laid-open Publication-No. 7-220741).

Hereinbelow, Examples and the Comparative Examples of the present invention are shown.

[Example 1] (not according to the invention)

In this Example, the oligomer represented by the general formula (3) was synthesized first as follows.

First, to a 1L three-necked flask equipped with a stirrer, a thermometer, a Dean-stark pipe and a three-way stop-cock for introducing nitrogen, 67.3 g (0.20 mol) of 2,2-bis(4-hydroxyphenyl)-1,1,1,3,3,3-hexafluoropropane (bisphenolAF) , 60. 3 g (0.24mol) of 4,4'-dichlorobenzophenone (4, 4'-DCBP) , 71.9 g (0.52 mol) of potassium carbonate, 300ml of N,N-dimethylacetamide (DMAc) and 150ml of toluene were added, heated in an oil bath and under nitrogen atmosphere, and allowed to react at 130°C under agitation. Water generated by the reaction was distilled off as an azeotrope with toluene, and removed out of the system through the Dean-stark pipe. Consequently, generation of water was no longer substantially observed in about 3 hours. Then, after most of the toluene was removed by gradually elevating the reaction temperature from 130°C to 150°C, the reaction was continued at 150°C for 10 hours, and then 10.0 g (0.040 mol) of 4, 4'-DCBP was added, and the reaction was performed for further 5 hours. The obtained reaction liquid was allowed to be cooled and sediment of inorganic by-product was filtered off, and the filtrate was added in 4L of methanol. The precipitated product was collected by filtration, dried and dissolved in 300 ml of tetrahydrofuran. This was added to 4L of methanol, and re-precipitated, and 95 g (yield: 85%) of the target compounds was obtained.

The polystyrene conversion number average molecular weight (Mn) determined by GPC using THF as a solvent of the obtained compound was 11,200. The obtained compound was soluble in THF, NMP, DMAc, sulfolane, etc., and had a Tg (glass transition temperature) of 110°C and heat decomposition temperature of 498°C, and was the oligomer (hereinafter referred to as BCPAF oligomer) represented by the following chemical formula (4).

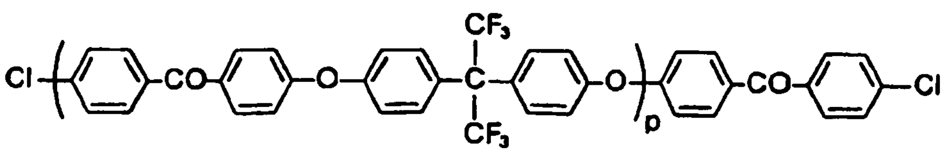
............ (4)

Next, a polyarylene copolymer having a sulfonic acid group was prepared as follows.

First, to a 1L three-necked flask equipped with a stirrer, a thermometer, a condenser, a Dean-stark pipe and a three-way stop-cock for introducing nitrogen, 39.58 g (98.64 mmol) of neo-pentyl 4-[4-(2,5-dichlorobenzoyl)phenoxy]benzenesulfonate, (hereinafter referred to as A-$SO_3$ neo-Pe), 15.23 g (1.36 mmol) of BCPAF oligomer (Mn=11,200) obtained in this Example, 21.67 g (2.55 mmol) of nickel$(PPh_3)_2Cl$, 10.49 g (40 mmol) of $PPh_3$, 0.45 g (3 mmol) of NaI, 15.69g (240 mmol) of zinc powder and 390ml of dry NMP were added under nitrogen atmosphere. The reaction system was heated under agitation (finally it was warmed to 75°C), and was allowed to react for 3 hours. Polymerization reaction liquid was diluted with 250ml of THF, agitated for 30 minutes, and filtered using Celite as a filter aid, and the filtrate was poured into an excessive amount of methanol (1500 ml) and aggregated. The aggregate was collected, air-dried, and redissolved in a mixed solvent of 200ml of THF and 300ml of NMP, and the aggregate was deposited with an excessive amount of methanol (1500 ml). After air-dried, 47.0 g (yield: 99%) of the target copolymer consisting of a sulfonic acid derivative protected by neopentyl group (hereinafter referred to as PolyAB-$SO_3$ neo-Pe) was obtained as yellow fibers by heating to dryness. The number average molecular weight (Mn) measured by GPC was 47, 600 and the weight average molecular weight (Mw) was 159,000.

5.1 g of the obtained PolyAB-$SO_3$ neo-Pe was dissolved in 60 ml of NMP, and warmed to 90°C. A mixture of 50 ml of methanol and 8 ml of concentrated hydrochloric acid was added at one time to form a suspension, and was reacted under a mild refluxing conditions for 10 hours. Next, the distillation apparatus was installed, excessive methanol

was distilled off and a light green transparent liquid was obtained. This liquid was poured into a lot of water / methanol mixed-solution (water: methanol =1:1 (weight ratio)) to aggregate the copolymer and the copolymer was washed with the ion exchange water until pH of washing water became six or more. IR spectrum of the thus obtained copolymer and the quantitative analysis of ion exchange capacity revealed that the sulfonic ester group ($-SO_3R^a$) was quantitatively converted into the sulfonic acid group ($-SO_3H$).

The number average molecular weight (Mn) of the obtained polyarylene copolymer having a sulfonic acid group (hereinafter referred to as sulfonated polymer) was 53,200 and the weight average molecular weight (Mw) was 185,000 by using as an eluant N-methyl-2-pyrrolidone (NMP) to which lithium bromide and phosphoric acid were added as a solvent and determining as a polystyrene conversion molecular weight by GPC.

The obtained sulfonated polymer was washed with water until the pH of the water was 4 to 6 so that the remaining free acid was fully removed. After dried, a predetermined amount was weighed, and dissolved in a mixed solvent of THF/water, and titrated with a standard liquid of NaOH using phenolphthalein as an indicator, and the ion exchange capacity was calculated from the neutralizing point. The ion exchange capacity (sulfonic acid equivalent) of the obtained sulfonated polymer was 1.9 meq/g.

Next, 10 % by weight of a N-methyl-2-pyrrolidone (NMP) solution of the obtained sulfonated polymer was cast on the glass plate for film-forming, and a membrane having a thickness of 40 μm was obtained.

Next, the membrane-electrode structure was produced as follows using the above-mentioned membrane.

First, platinum particle was made to be supported on carbon black (furnace black) having an average particle size of 50 nm in the weight ratio of carbon black : platinum = 1:1 to produce catalyst particles. Next, the above-mentioned catalyst particles were uniformly dispersed in a perfluoroalkylene sulfonic acid polymer compound (Nafion (trade name) by E. I. DuPont de Nemours& Co.) solution as an ion-conductive binder in the weight ratio of ion-conductive binder : catalyst particle = 8:5 to prepare a catalyst paste.

Next, carbon black and poly tetrafluoro ethylene (PTFE) particles were mixed at a weight ratio of carbon black to PTFE particles of 4 : 6, and a slurry prepared by uniformly dispersing the obtained mixture in ethylene glycol was applied on one side of carbon paper and dried to form a primer, and two gas diffusion layers 3 which consist of the primer layer and carbon paper were produced.

Next, the above-mentioned catalyst paste was screen printed on each of the gas diffusion layers 3 so that the platinum content becomes 0.5 $mg/cm^2$, and dried to form the electrode catalyst layer 1, and a pair of electrodes which consist of the electrode catalyst layer 1 and the gas diffusion layer 3 were produced. The drying operation was comprised of drying at 60°C for 10 minutes and drying at 120°C for 60 minutes under reduced pressure.

Next, the above-mentioned film was used as the solid polymer electrolyte membrane 2, sandwiched by the above-mentioned electrodes on the side of the electrode catalyst layer 1, hot-pressed, and the membrane-electrode structure was obtained. As for the above-mentioned hot-press, the primary hot-press at 80°C and 5 MPa for 2 minutes was followed by the secondary hot-press at 160°C and 4 MPa for 1 minute.

The membrane-electrode structure obtained by the present invention can constitute a solid polymer fuel cell by laminating a separator which serves as gas passages further on the gas diffusion layer.

Next, the physical properties of the sulfonated polymer obtained in this Example and the solid polymer electrolyte membrane 2 and the power generation characteristics of the membrane-electrode structure were evaluated as follows. The results are shown in Table 1.

The number average molecular weight of the polymer segment (B) of the obtained sulfonated polymer was shown in terms of the number average molecular weight of the BCPAF oligomer.

The proton conductivity of the solid polymer electrolyte membrane 2 was determined by first preparing a sample of the solid polymer electrolyte membrane 2 in the shape of a strip having a width of 5 mm, pressing platinum lines (diameter: 0. 5 mm) against the surface of this sample, holding the sample in a chamber which keeps constant temperature and humidity and measuring alternating-current impedance measurement between platinum lines thereby determining the alternating-current resistance. As the resistance measurement equipment, SI1260 impedance analyzer (trade name), product of Solartron was used and the chamber which keeps constant temperature and humidity, a small environment test machine SH-241 (trade name) , product of Espec Corp. was used. Five platinum lines were pressed at 5 mm interval and the distance between the lines was varied from 5 to 20 mm, and the alternating-current resistance was measured. Next, the specific resistance of the solid polymer electrolyte membrane 2 was calculated from the gradient of the distance between lines and the resistance based on the following formula and the alternating-current impedance was calculated from the reciprocal of the specific resistance and the proton conductivity was calculated from this impedance.

$$\text{Specific resistance R } (\Omega\cdot\text{cm}) = 0.5(\text{cm}) \times \text{Membrane thickness (cm)} \times \text{Gradient of the resistance on distance between lines } (\Omega/\text{cm})$$

The Fenton resistance (oxidation resistance) of the solid polymer electrolyte membrane 2 was evaluated as follows. Fenton reagent was prepared by adding iron (II) sulfate heptahydrate to 3% oxygenated water so that concentration of iron ion ($Fe^{2+}$) becomes about 20 ppm. The temperature of the liquid was adjusted to 40°C and the sample cut into 3.0 cm x 4.0 cm was immersed to 200 ml of the liquid. Fenton resistance of each sample was evaluated by the time till the number average molecular weight (Mn) reached about 20,000.

The power generation characteristics of the membrane-electrode structure was evaluated as follows. First, pure hydrogen was supplied to the fuel electrode and air to the oxygen electrode respectively under power generation condition that the temperature was 90°C, the relative humidity on the side of the fuel electrode was 30%, the relative humidity on the side of the oxygen electrode was 45%, and the cell potential was measured at a current density of 1 A/$cm^2$, whereby the power generation performance under high temperature and low humidity environment was evaluated.

In addition, pure hydrogen was supplied to the fuel electrode and air to the oxygen electrode respectively under power generation condition that the temperature was 95°C, the relative humidity on the side of the fuel electrode was 30%, the relative humidity on the side of the oxygen electrode was 55%, and the time until the membrane was damaged and resulted in crossing leak was measured at a current density of 1 A/$cm^2$, whereby the durability was evaluated.

[Example 2]

In this Example, synthesis was performed in the same manner as in Example 1 except that the amount used each of 2,2-bis(4-hydroxyphenyl)-1,1,1,3,3,3-hexafluoropropane and 4,4'-dichlorobenzophenone was changed, and a BCPAF oligomer was obtained. The polystyrene conversion number average molecular weight (Mn) determined by GPC using THF as a solvent of the obtained oligomer was 1,200.

Next, a sulfonated polymer was synthesized in the same manner as in Example 1 except that the BCPAF oligomer obtained in this Example was used. The molecular weight and ion exchange capacity were measured on the sulfonated polymer obtained in this Example in the same manner as in Example 1, and the number average molecular weight (Mn) was 52,000, the weight average molecular weight (Mw) was 178,000, and the ion exchange capacity (sulfonic acid equivalent) was 1.9 meq/g.

Next, a membrane-electrode structure was prepared in the same manner as in Example 1 except that 10 % by weight of an N-methyl-2-pyrrolidone (NMP) solution of the sulfonated polymer obtained in this Example was cast on a glass plate to form a film having a thickness of 40 μm.

Next, the physical properties of the sulfonated polymer and the solid polymer electrolyte membrane 2 and the power generation characteristic of the membrane-electrode structure obtained in this Example were evaluated in the same manner as in Example 1. The results are shown in Table 1.

[Example 3]

In this Example, synthesis was performed in the same manner as in Example 1 except that the amount used each of 2,2-bis(4-hydroxyphenyl)-1,1,1,3,3,3-hexafluoropropane and 4,4'-dichlorobenzophenone was changed, and a BCPAF oligomer was obtained. The polystyrene conversion number average molecular weight (Mn) determined by GPC using THF as a solvent of the obtained oligomer was 6,000.

Next, a sulfonated polymer was synthesized in the same manner as in Example 1 except that the BCPAF oligomer obtained in this Example was used. The molecular weight and ion exchange capacity were measured on the sulfonated polymer obtained in this Example in the same manner as in Example 1, and the number average molecular weight (Mn) was 55,000, the weight average molecular weight (Mw) was 190,000, and the ion exchange capacity (sulfonic acid equivalent) was 1.9 meq/g.

Next, a membrane-electrode structure was prepared in the same manner as in Example 1 except that 10 % by weight of an N-methyl-2-pyrrolidone (NMP) solution of the sulfonated polymer obtained in this Example was cast on a glass plate to form a flim having a thickness of 40 μm.

Next, the physical properties of the sulfonated polymer and the solid polymer electrolyte membrane 2 and the power generation characteristic of the membrane-electrode structure obtained in this Example were evaluated in the same manner as in Example 1. The results are shown in Table 1.

[Comparative Example 1]

In this Comparative Example, synthesis was performed in the same manner as in Example 1 except that the amount used each of 2,2-bis(4-hydroxyphenyl)-1,1,1,3,3,3-hexafluoropropane and 4,4'-dichlorobenzophenone was changed, and a BCPAF oligomer was obtained. The polystyrene conversion number average molecular weight (Mn) determined by GPC using THF as a solvent of the obtained oligomer was 700.

Next, a sulfonated polymer was synthesized in the same manner as in Example 1 except that the BCPAF oligomer obtained in this Comparative Example was used. The molecular weight and ion exchange capacity were measured on the sulfonated polymer obtained in this Comparative Example in the same manner as in Example 1, and the number average molecular weight (Mn) was 49,000, the weight average molecular weight (Mw) was 158,000, and the ion exchange capacity (sulfonic acid equivalent) was 1.9 meq/g.

Next, a membrane-electrode structure was prepared in the same manner as in Example 1 except that 10 % by weight of an N-methyl-2-pyrrolidone (NMP) solution of the sulfonated polymer obtained in this Comparative Example was cast on a glass plate to form a flim having a thickness of 40 μm.

Next, the physical properties of the sulfonated polymer and the solid polymer electrolyte membrane 2 and the power generation characteristic of the membrane-electrode structure obtained in this Comparative Example were evaluated in the same manner as in Example 1. The results are shown in Table 1.

[Comparative Example 2]

In this Comparative Example, synthesis was performed in the same manner as in Example 1 except that the amount used each of 2,2-bis(4-hydroxyphenyl)-1,1,1,3,3,3-hexafluoropropane and 4,4'-dichlorobenzophenone was changed, and a BCPAF oligomer was obtained. The polystyrene conversion number average molecular weight (Mn) determined by GPC using THF as a solvent of the obtained oligomer was 16,000.

Next, a sulfonated polymer was synthesized in the same manner as in Example 1 except that the BCPAF oligomer obtained in this Comparative Example was used. The molecular weight and ion exchange capacity were measured on the sulfonated polymer obtained in this Comparative Example in the same manner as in Example 1, and the number average molecular weight (Mn) was 51,000, the weight average molecular weight (Mw) was 169,000, and the ion exchange capacity (sulfonic acid equivalent) was 1.9 meq/g.

Next, a membrane-electrode structure was prepared in the same manner as in Example 1 except that 10 % by weight of an N-methyl-2-pyrrolidone (NMP) solution of the sulfonated polymer obtained in this Comparative Example was cast on a glass plate to form a flim having a thickness of 40 μm.

Next, the physical properties of the sulfonated polymer and the solid polymer electrolyte membrane 2 and the power generation characteristic of the membrane-electrode structure obtained in this Comparative Example were evaluated in the same manner as in Example 1. The results are shown in Table 1.

As for the membrane-electrode structure obtained in this Comparative Example, the predetermined power generation performance (cell potential) was not obtained, and therefore durability was not evaluated.

[Table 1]

| | Number Average Molecular Weight Mn of Polymer Segment (B) | Proton Conductivity (S/cm) | Fenton Resistance (Hr) | Power Generation Performance (V) | Durability (Hr) |
|---|---|---|---|---|---|
| Example 1 | 11200 | 0.023 | 17 | 0.633 | 1200 |
| Example 2 | 1200 | 0.021 | 10 | 0.629 | 700 |
| Example 3 | 6000 | 0.022 | 15 | 0.630 | 900 |
| Comparative Example 1 | 700 | 0.019 | 7 | 0.617 | 280 |
| Comparative Example 2 | 16000 | 0.011 | 16 | 0.597 | -- |

Example 1 is not according to the invention.

It is clear from Table 1 that a membrane-electrode structure suitable for a solid polymer fuel cell excellent in power generation performance and durability can be obtained by adjusting the number average molecular weight (Mn) of the polymer segment (B) within the range of 1,000 to 12,000 as in Examples 1 to 3. On the other hand, according to Comparative Example 1, in which the molecular weight of the polymer segment (B) is less than 1, 000, the molecular weight of the hydrophobic unit is too low and the backbone of the polymer is susceptible to attack by radicals, which causes significant deterioration in the durability. On the other hand, according to Comparative Example 2, in which the number average molecular weight of the polymer segment (B) exceeds 12000, the hydrophobicity becomes excessive, the ion-conductivity is inhibited, and necessary power generation performance cannot be obtained.

A membrane-electrode structure for a solid polymer fuel cell excellent in power generation performance and durability and a solidpolymer fuel cell comprising themembrane-electrode structure are provided. In the membrane-electrode structure for a solid polymer fuel cell in which the polymer electrolyte membrane 2 is sandwiched between a pair of electrodes 1 containing a catalyst, the polymer electrolyte membrane 1 comprises a constituent unit (A) which has an ion conductive moiety consisting of a sulfonic acid group and is represented by the following general formula (I) and a constituent unit (B) consisting only of a non-ion conductive moiety which has a number average molecular weight in the range of 3000 to 8000 measured by gel permeation chromatography and is represented by the following general formula (II). The above-mentioned copolymer is a block copolymer in which the constituent unit (A) and the constituent unit (B) are covalently bonded. The solid polymer fuel cell comprises the above-mentioned membrane-electrode structure for a solid polymer fuel cell.

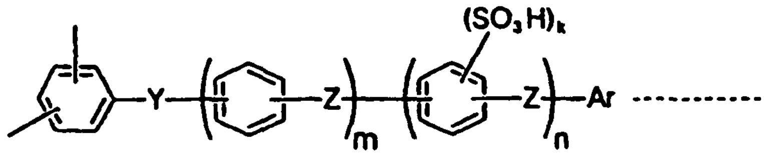

(I)

(wherein Y represents a divalent electron withdrawing group; Z represents a divalent electron donating group or a direct bond; Ar represents an aromatic group having a substitutent represented by $-SO_3H$; m represents an integer of 0 to 10; n represents an integer of 0 to 10; and k represents an integer of 1 to 4.)

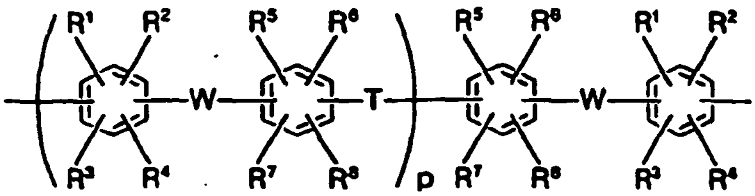

(II)

(wherein $R^1$ to $R^8$, which may.be the same or different, each represent at least one atom or group selected from the group consisting of a hydrogen atom, a fluorine atom, an alkyl group, a fluorine substituted alkyl group, an allyl group, an aryl group and a cyano group; W represents a divalent electron withdrawing group or a single bond; T represents a single bond or a divalent organic group and p represents 0 or a positive integer).

## Claims

1. A membrane-electrode structure for a solid polymer fuel cell having a polymer electrolyte membrane sandwiched between a pair of catalyst-containing electrodes, wherein the polymer electrolyte membrane comprises a constituent unit (A) which has an ion conductive moiety consisting of a sulfonic acid group and is represented by the following general formula (I) and a constituent unit (B) consisting only of a non-ion conductive moiety which has a number average molecular weight in the range of 3,000 to 8,000 measured by gel permeation chromatography and is represented by the following general formula (II):

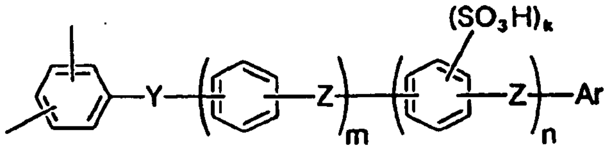

----------- ( I )

wherein Y represents a divalent electron withdrawing group;
Z represents a divalent electron donating group or a direct bond; Ar represents an aromatic group having a substituent represented by $-SO_3H$; m represents an integer of 0 to 10; n represents an integer of 0 to 10; and k represents an integer of 1 to 4; and

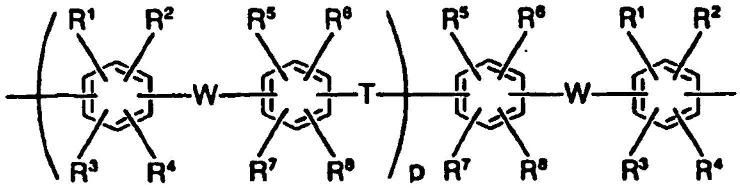

----------- (II)

wherein $R^1$ to $R^8$, which may be the same or different, each represent at least one atom or group selected from the group consisting of a hydrogen atom, a fluorine atom, an alkyl group, a fluorine substituted alkyl group, an allyl group, an aryl group and a cyano group; W represents a divalent electron withdrawing group or a single bond; T represents a single bond or a divalent organic group and p represents 0 or a positive integer.

2. The membrane-electrode structure for a solid polymer fuel cell according to Claim 1, wherein the copolymer having the constituent unit (A) and the constituent unit (B) is preferably a block copolymer in which the constituent unit (A) and the constituent unit (B) are covalently bonded.

3. The membrane-electrode structure for a solid polymer fuel cell according to Claim 1, wherein the constituent unit (B) is represented by the following general formula (III).

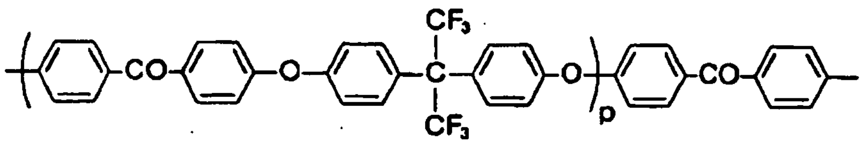

----------- (III)

4. A solid polymer fuel cell comprising a membrane-electrode structure for a solid polymer fuel cell having a polymer electrolyte membrane sandwiched between a pair of catalyst-containing electrodes, wherein the polymer electrolyte membrane comprises a constituent unit (A) which has an ion conductive moiety consisting of a sulfonic acid group and is represented by the following general formula (I) and a constituent unit (B) consisting only of a non-ion conductive moiety which has a number average molecular weight in the range of 3,000 to 8,000 measured by gel permeation chromatography and is represented by the following general formula (II):

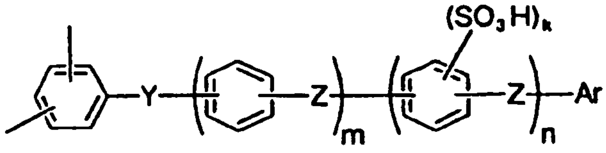

(I)

wherein Y represents a divalent electron withdrawing group;
Z represents a divalent electron donating group or a direct bond; Ar represents an aromatic group having a substituent represented by $-SO_3H$; m represents an integer of 0 to 10; n represents an integer of 0 to 10; and k represents an integer of 1 to 4; and

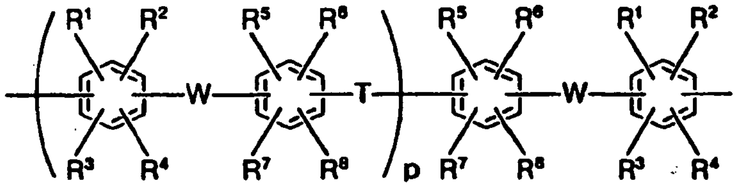

(II)

wherein $R^1$ to $R^8$, which may be the same or different, each represent at least one atom or group selected from the group consisting of a hydrogen atom, a fluorine atom, an alkyl group, a fluorine substituted alkyl group, an allyl group, an aryl group and a cyano group; W represents a divalent electron withdrawing group or a single bond; T represents a single bond or a divalent organic group and p represents 0 or a positive integer.

**5.** The solid polymer fuel cell according to Claim 4, wherein the copolymer having the constituent unit (A) and the constituent unit (B) is preferably a block copolymer in which the constituent unit (A) and the constituent unit (B) are covalently bonded.

**6.** The solid polymer fuel cell according to Claim 4, wherein the constituent unit (B) is represented by the following general formula (III).

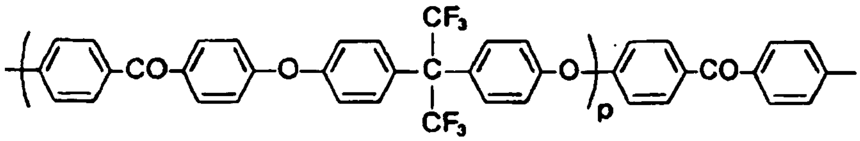

(III)

**Patentansprüche**

**1.** Membran-Elektroden-Struktur für eine Festpolymer-Brennstoffzelle mit einer Polymer-Elektrolyt-Membran, die zwischen ein Paar Katalysator-enthaltende Elektroden eingefügt ist, wobei die Polymer-Elektrolyt-Membran eine Komponenteneinheit (A), die einen Ionenleitenden Rest aufweist, der aus einer Sulfonsäure-Gruppe besteht und durch die folgende allgemeine Formel (I) dargestellt wird, und eine Komponenteneinheit (B), die nur aus einem nicht-Ionenleitenden Rest besteht, der ein zahlenmittleres Molekulargewicht im Bereich von 3.000 bis 8.000 aufweist, gemessen durch Gelpermeationschromatographie, und durch die folgende allgemeine Formel (II) dargestellt wird, umfasst:

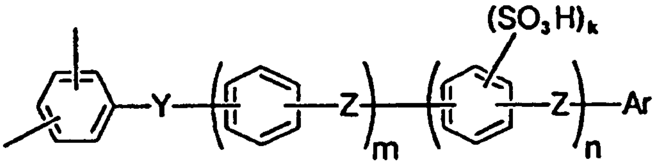

(I)

wobei Y eine zweiwertige elektronenziehende Gruppe darstellt; Z eine zweiwertige elektronengebende Gruppe oder eine direkte Bindung darstellt; Ar eine aromatische Gruppe mit einem Substituenten, dargestellt durch $-SO_3H$, darstellt; m eine ganze Zahl von 0 bis 10 darstellt; n eine ganze Zahl von 0 bis 10 darstellt; und k eine ganze Zahl von 1 bis 4 darstellt; und

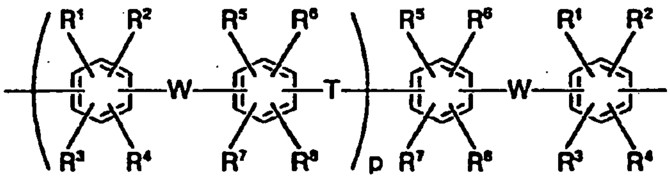

(II)

wobei $R^1$ bis $R^8$, die gleich oder unterschiedlich sein können, jeder mindestens ein Atom oder eine Gruppe ausgewählt aus der Gruppe bestehend aus einem Wasserstoffatom, einem Fluoratom, einer Alkylgruppe, einer Fluor-substituierten Alkylgruppe, einer Allylgruppe, einer Arylgruppe und einer Cyanogruppe darstellt; W eine zweiwertige elektronenziehende Gruppe oder eine Einfachbindung darstellt; T eine Einfachbindung oder eine zweiwertige organische Gruppe darstellt und p 0 oder eine positive ganze Zahl darstellt.

2. Membran-Elektroden-Struktur für eine Festpolymer-Brennstoffzelle nach Anspruch 1, wobei das Copolymer mit der Komponenteneinheit (A) und der Komponenteneinheit (B) vorzugsweise ein Block-Copolymer ist, in dem die Komponenteneinheit (A) und die Komponenteneinheit (B) kovalent gebunden sind.

3. Membran-Elektroden-Struktur für eine Festpolymer-Brennstoffzelle nach Anspruch 1, wobei die Komponenteneinheit (B) durch die folgende allgemeine Formel (III) dargestellt wird.

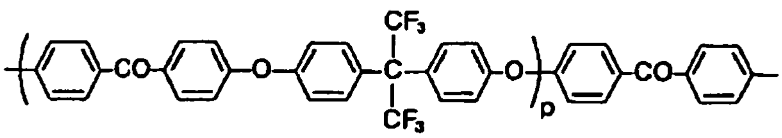

(III)

4. Festpolymer-Brennstoffzelle, umfassend eine Membran-Elektroden-Struktur für eine Festpolymer-Brennstoffzelle mit einer Polymer-Elektrolyt-Membran, die zwischen ein Paar Katalysator-enthaltende Elektroden eingefügt ist, wobei die Polymer-Elektrolyt-Membran eine Komponenteneinheit (A), die einen Ionenleitenden Rest aufweist, der aus einer Sulfonsäure-Gruppe besteht und durch die folgende allgemeine Formel

(I) dargestellt wird, und eine Komponenteneinheit (B), die nur aus einem nicht-Ionenleitenden Rest besteht, der ein zahlenmittleres Molekulargewicht im Bereich von 3.000 bis 8.000 aufweist, gemessen durch Gelpermeationschromatographie, und durch die folgende allgemeine Formel
(II) dargestellt wird, umfasst:

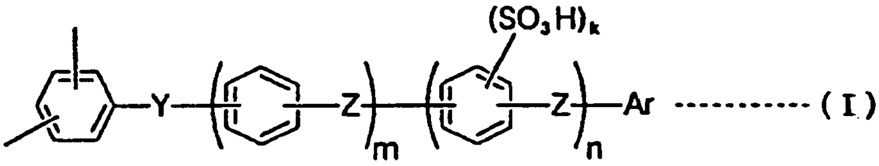

wobei Y eine zweiwertige elektronenziehende Gruppe darstellt; Z eine zweiwertige elektronengebende Gruppe oder eine direkte Bindung darstellt; Ar eine aromatische Gruppe mit einem Substituenten, dargestellt durch $-SO_3H$, darstellt; m eine ganze Zahl von 0 bis 10 darstellt; n eine ganze Zahl von 0 bis 10 darstellt; und k eine ganze Zahl von 1 bis 4 darstellt; und

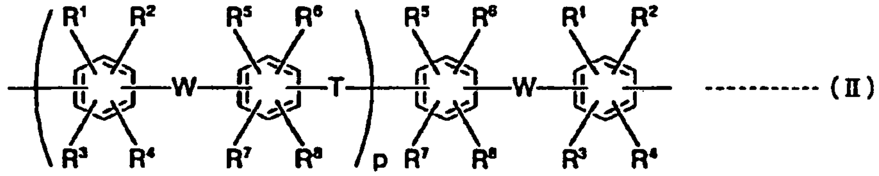

wobei $R^1$ bis $R^8$, die gleich oder unterschiedlich sein können, jeder mindestens ein Atom oder eine Gruppe ausgewählt aus der Gruppe bestehend aus einem Wasserstoffatom, einem Fluoratom, einer Alkylgruppe, einer Fluor-substituierten Alkylgruppe, einer Allylgruppe, einer Arylgruppe und einer Cyanogruppe darstellt; W eine zweiwertige elektronenziehende Gruppe oder eine Einfachbindung darstellt; T eine Einfachbindung oder eine zweiwertige organische Gruppe darstellt und p 0 oder eine positive ganze Zahl darstellt.

5. Festpolymer-Brennstoffzelle nach Anspruch 4, wobei das Copolymer mit der Komponenteneinheit (A) und der Komponenteneinheit (B) vorzugsweise ein Block-Copolymer ist, in dem die Komponenteneinheit (A) und die Komponenteneinheit (B) kovalent gebunden sind.

6. Festpolymer-Brennstoffzelle nach Anspruch 4, wobei die Komponenteneinheit (B) durch die folgende allgemeine Formel (III) dargestellt wird.

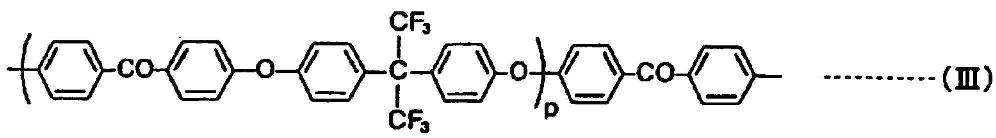

## Revendications

1. Structure membrane-électrode pour une pile à combustible à polymère solide ayant une membrane électrolyte polymère en sandwich entre une paire d'électrodes contenant un catalyseur, dans laquelle la membrane électrolyte polymère comprend un motif constitutif (A) qui a un fragment conducteur ionique consistant en un groupe acide sulfonique et qui est représenté par la formule générale (I) suivante et un motif constitutif (B) consistant seulement en un fragment non conducteur ionique qui a un poids moléculaire moyen en nombre dans la gamme de 3 000 à 8 000 mesuré par chromatographie par perméation de gel et qui est représenté par la formule générale (II) suivante :

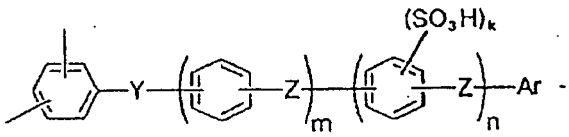 ( I )

dans laquelle Y représente un groupe attracteur d'électrons divalent ; Z représente un groupe donneur d'électrons divalent ou une liaison directe ; Ar représente un groupe aromatique ayant un substituant représenté par $-SO_3H$ ; m représente un entier de 0 à 10 ; n représente un entier de 0 à 10 ; et k représente un entier de 1 à 4 ; et

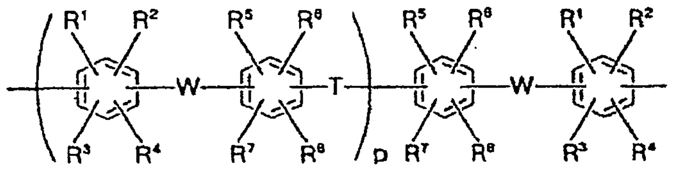 (II)

dans laquelle $R^1$ à $R^8$, qui peuvent être identiques ou différents, représentent chacun au moins un atome ou groupe choisi dans le groupe constitué par un atome d'hydrogène, un atome de fluor, un groupe alkyle, un groupe alkyle substitué par du fluor, un groupe allyle, un groupe aryle et un groupe cyano ; W représente un groupe attracteur d'électrons divalent ou une liaison simple ; T représente une liaison simple ou un groupe organique divalent et p représente 0 ou un entier positif.

2. Structure membrane-électrode pour une pile à combustible à polymère solide selon la revendication 1, dans laquelle le copolymère ayant le motif constitutif (A) et le motif constitutif (B) est de préférence un copolymère séquencé dans lequel le motif constitutif (A) et le motif constitutif (B) sont liés de façon covalente.

3. Structure membrane-électrode pour une pile à combustible à polymère solide selon la revendication 1, dans laquelle le motif constitutif (B) est représenté par la formule générale (III) suivante.

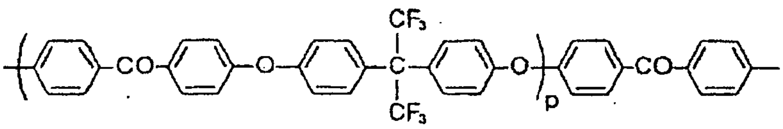 (III)

4. Pile à combustible à polymère solide comprenant une structure membrane-électrode pour une pile à combustible à polymère solide ayant une membrane électrolyte polymère en sandwich entre une paire d'électrodes contenant un catalyseur, dans laquelle la membrane électrolyte polymère comprend un motif constitutif (A) qui a un fragment conducteur ionique consistant en un groupe acide sulfonique et qui est représenté par la formule générale (I) suivante et un motif constitutif (B) consistant seulement en un fragment non conducteur ionique qui a un poids moléculaire moyen en nombre dans la gamme de 3 000 à 8 000 mesuré par chromatographie par perméation de gel et qui est représenté par la formule générale (II) suivante :

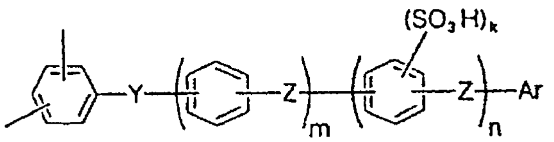 ( I )

dans laquelle Y représente un groupe attracteur d'électrons divalent ; Z représente un groupe donneur d'électrons divalent ou une liaison directe ; Ar représente un groupe aromatique ayant un substituant représenté par $-SO_3H$ ; m représente un entier de 0 à 10 ; n représente un entier de 0 à 10 ; et k représente un entier de 1 à 4 ; et

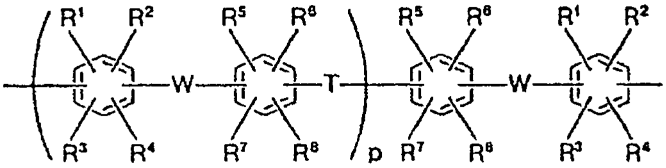 ---------- (II)

dans laquelle $R^1$ à $R^8$, qui peuvent être identiques ou différents, représentent chacun au moins un atome ou groupe choisi dans le groupe constitué par un atome d'hydrogène, un atome de fluor, un groupe alkyle, un groupe alkyle substitué par du fluor, un groupe allyle, un groupe aryle et un groupe cyano ; W représente un groupe attracteur d'électrons divalent ou une liaison simple ; T représente une liaison simple ou un groupe organique divalent et p représente 0 ou un entier positif.

**5.** Pile à combustible à polymère solide selon la revendication 4, dans laquelle le copolymère ayant le motif constitutif (A) et le motif constitutif (B) est de préférence un copolymère séquencé dans lequel le motif constitutif (A) et le motif constitutif (B) sont liés de façon covalente.

**6.** Pile à combustible à polymère solide selon la revendication 4, dans laquelle le motif constitutif (B) est représenté par la formule générale (III) suivante.

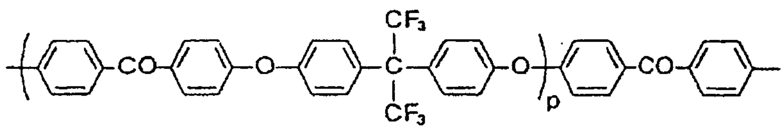 ---------- (III)

FIG. 1

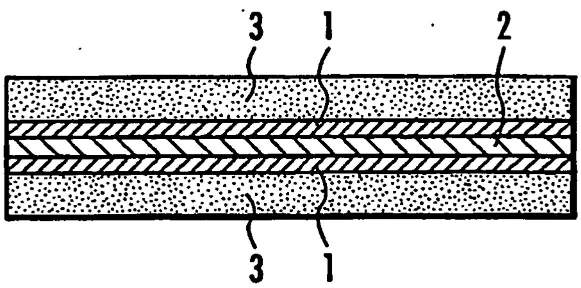

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5403675 A
- JP 2000159 A
- JP 7220741 A


### Non-patent literature cited in the description


- *Polymer Preprints,* 1993, vol. 42 (3), 730
- *Polymer Preprints,* 1994, vol. 43 (3), 736
- *Polymer Preprints,* 1993, vol. 42 (7), 2490-2492